# EUROPEAN PATENT APPLICATION

(11) **EP 4 024 724 A1**
(43) Date of publication of application: **06.07.2022**
(21) Application number: 20860943.8
(22) Date of filing: 31.08.2020
(51) Int. Cl.: H04B 7/0452, H04L 5/00

(54) **DATA TRANSMISSION METHOD AND DEVICE**

(30) Priority: 05.09.2019 CN 201910838828
(71) Applicant: Huawei Technologies Co., Ltd., Longgang District Shenzhen, Guangdong 518129 (CN)
(72) Inventor: YU, Jian, Shenzhen, Guangdong 518129 (CN); LIANG, Dandan, Shenzhen, Guangdong 518129 (CN); CAO, Ju, Shenzhen, Guangdong 518129 (CN); GAN, Ming, Shenzhen, Guangdong 518129 (CN)
(74) Representative: Thun, Clemens
(86) International application number: PCT/CN2020/112666
(87) International publication number: WO 2021/043111

(57) **Abstract**

This application relates to the field of communications technologies, and provides a data transmission method and an apparatus, to improve spectrum utilization of a frequency band with a bandwidth of 320 MHz or 160+160 MHz. The communication method includes the following step: An AP or a STA transmits a PPDU in a first frequency band, where a bandwidth of the first frequency band is 320 MHz or 160+160 MHz, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer greater than 52. This application is applicable to a data transmission process.

## Description

This application claims priority to Chinese Patent Application No. 201910838828.7, filed with the China National Intellectual Property Administration on September 5, 2019, and entitled "DATA TRANSMISSION METHOD AND APPARATUS", which is incorporated herein by reference in its entirety.

### TECHNICAL FIELD

This application relates to the field of communications technologies, and in particular, to a data transmission method and an apparatus.

### BACKGROUND

The 802.11 standard is a general standard for a wireless local area network (wireless local area network, WLAN). Currently, the Institute of Electrical and Electronics Engineers (Institute of Electrical and Electronics Engineers, IEEE) is discussing a next generation 802.11 standard after 802.11ax. Compared with the previous 802.11 standard, the next generation 802.11 standard supports extremely high throughput (extremely high throughput, EHT) data transmission.

To achieve an objective of supporting extremely high throughput data transmission, the next generation 802.11 standard needs to support a larger bandwidth, such as 320 megahertz (MHz) or 160+160 MHz. However, currently, spectrum utilization of a subcarrier distribution (tone plan) of the 320 MHz or 160+160 MHz bandwidth proposed in the industry is low.

### SUMMARY

This application provides a data transmission method and an apparatus, to improve spectrum utilization of a frequency band with a bandwidth of 320 MHz or 160+160 MHz.

According to a first aspect, a data transmission method is provided and includes the following step: A communications apparatus transmits a physical layer protocol data unit (physical layer protocol data unit, PPDU) in a first frequency band, where a bandwidth of the first frequency band is 320 MHz or 160+160 MHz, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer greater than 52. Based on the technical solution of this application, the first frequency band has more data and pilot subcarriers, so that the first frequency band can carry more data, thereby improving spectrum utilization of the first frequency band.

In a possible design, when the communications apparatus is a transmit end of the PPDU, before the communications apparatus transmits the PPDU in the first frequency band, the method further includes: the communications apparatus generates the PPDU; and that the communications apparatus transmits the PPDU in the first frequency band includes: the communications apparatus sends the PPDU in the first frequency band.

In a possible design, when the communications apparatus is a receive end of the PPDU, that the communications apparatus transmits the PPDU in the first frequency band includes: the communications apparatus receives the PPDU in the first frequency band; and after the communications apparatus transmits the PPDU in the first frequency band, the method further includes: the communications apparatus parses the PPDU.

In a possible design, the second frequency domain resource includes a first resource unit (resource unit, RU), a second RU, and a third RU, the first RU, the second RU, and the third RU sequentially increase in a frequency spectrum, and each of the first RU, the second RU, and the third RU includes 26 data and pilot subcarriers.

In a possible design, the four subbands include a first subband, a second subband, a third subband, and a fourth subband, where the first subband, the second subband, the third subband, and the fourth subband sequentially increase in the frequency spectrum

In a possible design, the first subband is located between the first RU and the second subband, the second RU is located between the second subband and the third subband, and the fourth subband is located between the third subband and the third RU. In this way, when the first RU does not carry data, subcarriers included in the first RU are equivalent to guard subcarriers, thereby increasing a quantity of guard subcarriers and facilitating reduction of filter implementation complexity. Similarly, when the third RU does not carry data, subcarriers included in the third RU are equivalent to guard subcarriers, thereby increasing the quantity of guard subcarriers and facilitating reduction of filter implementation complexity.

In a possible design, the first frequency band further includes a direct current (direct current, DC) region, the second RU includes a head 13RU and a tail 13RU, and the DC region is located between the head 13RU and the tail 13RU.

In a possible design, the DC region includes five DC subcarriers.

In a possible design, the first frequency band further includes 15 guard subcarriers, and the first RU is located between the 15 guard subcarriers and the first subband.

In a possible design, the first frequency band further includes 14 guard subcarriers, and the third RU is located between the 14 guard subcarriers and the fourth subband.

In a possible design, the first RU is located between the first subband and the second subband, the second RU is located between the second subband and the third subband, and the third RU is located between the third subband and the fourth subband. In this way, when the first RU does not carry data, the subcarriers included in the first RU are equivalent to null subcarriers, thereby increasing a quantity of null subcarriers between the first subband and the second subband and facilitating guarding between the first subband and the second subband. Similarly, when the third RU does not carry data, the subcarriers included in the third RU are equivalent to null subcarriers, thereby increasing a quantity of null subcarriers between the third subband and the fourth subband and facilitating guarding between the third subband and the fourth subband.

In a possible design, the first frequency band further includes one or more null subcarriers, and the one or more null subcarriers are located between the first RU and the first subband.

In a possible design, one or more null subcarriers exist between the first RU and the second subband.

In a possible design, one or more null subcarriers exist between the third RU and the third subband.

In a possible design, one or more null subcarriers exist between the third RU and the fourth subband.

In a possible design, the first frequency band includes 13 guard subcarriers, and the first subband is located between the first RU and the 13 guard subcarriers.

In a possible design, the first frequency band includes 12 guard subcarriers, and the fourth subband is located between the third RU and the 12 guard subcarriers.

In a possible design, the first frequency band further includes a DC region, the second RU includes a head 13RU and a tail 13RU, and the DC region is located between the head 13RU and the tail 13RU.

In a possible design, the DC region includes five DC subcarriers.

In a possible design, the first RU is located between the second RU and the second subband, the second RU is located between the first RU and the third RU, and the third RU is located between the second RU and the third subband.

In a possible design, the first frequency band further includes 12 guard subcarriers, and the first subband is located between the 12 guard subcarriers and the second subband.

In a possible design, the first frequency band further includes 11 guard subcarriers, and the fourth subband is located between the 11 guard subcarriers and the third subband.

In a possible design, the first frequency band further includes a DC region, the second RU includes a head 13RU and a tail 13RU, and the DC region is located between the head 13RU and the tail 13RU.

In a possible design, the DC region includes 11 DC subcarriers.

According to a second aspect, a communications apparatus is provided and includes a communications module, configured to transmit a physical layer protocol data unit (PPDU) in a first frequency band, where a bandwidth of the first frequency band is 320 MHz or 160+160 MHz, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer greater than 52.

In a possible design, the communications apparatus further includes a processing module. The processing module is configured to generate the PPDU. The communications module is specifically configured to send the PPDU in the first frequency band.

In a possible design, the communications apparatus further includes a processing module. The communications module is specifically configured to receive the PPDU in the first frequency band. The processing module is specifically configured to parse the PPDU.

In a possible design, the second frequency domain resource includes a first RU, a second RU, and a third RU, the first RU, the second RU, and the third RU sequentially increase in a frequency spectrum, and each of the first RU, the second RU, and the third RU includes 26 data and pilot subcarriers.

In a possible design, the four subbands include a first subband, a second subband, a third subband, and a fourth subband, where the first subband, the second subband, the third subband, and the fourth subband sequentially increase in the frequency spectrum

In a possible design, the first subband is located between the first RU and the second subband, the second RU is located between the second subband and the third subband, and the fourth subband is located between the third subband and the third RU.

In a possible design, the first frequency band further includes a DC region, the second RU includes a head 13RU and a tail 13RU, and the DC region is located between the head 13RU and the tail 13RU.

In a possible design, the DC region includes five DC subcarriers.

In a possible design, the first frequency band further includes 15 guard subcarriers, and the first RU is located between the 15 guard subcarriers and the first subband.

In a possible design, the first frequency band further includes 14 guard subcarriers, and the third RU is located between the 14 guard subcarriers and the fourth subband.

In a possible design, the first RU is located between the first subband and the second subband, the second RU is located between the second subband and the third subband, and the third RU is located between the third subband and the fourth subband.

In a possible design, the first frequency band further includes one or more null subcarriers, and the one or more null subcarriers are located between the first RU and the first subband.

In a possible design, one or more null subcarriers exist between the first RU and the second subband.

In a possible design, one or more null subcarriers exist between the third RU and the third subband.

In a possible design, one or more null subcarriers exist between the third RU and the fourth subband.

In a possible design, the first frequency band includes 13 guard subcarriers, and the first subband is located between the first RU and the 13 guard subcarriers.

In a possible design, the first frequency band includes 12 guard subcarriers, and the fourth subband is located between the third RU and the 12 guard subcarriers.

In a possible design, the first frequency band further includes a DC region, the second RU includes a head 13RU and a tail 13RU, and the DC region is located between the head 13RU and the tail 13RU.

In a possible design, the DC region includes five DC subcarriers.

In a possible design, the first RU is located between the second RU and the second subband, the second RU is located between the first RU and the third RU, and the third RU is located between the second RU and the third subband.

In a possible design, the first frequency band further includes 12 guard subcarriers, and the first subband is located between the 12 guard subcarriers and the second subband.

In a possible design, the first frequency band further includes 11 guard subcarriers, and the fourth subband is located between the 11 guard subcarriers and the third subband.

In a possible design, the first frequency band further includes a DC region, the second RU includes a head 13RU and a tail 13RU, and the DC region is located between the head 13RU and the tail 13RU.

In a possible design, the DC region includes 11 DC subcarriers.

According to a third aspect, a communications apparatus is provided, and the communications apparatus includes a communications interface. The communications interface is configured to transmit a physical layer protocol data unit (PPDU) in a first frequency band, where a bandwidth of the first frequency band is 320 MHz or 160+160 MHz, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer greater than 52.

In a possible design, the communications apparatus further includes a processor. The processor is configured to generate the PPDU. The communications interface is specifically configured to send the PPDU in the first frequency band.

In a possible design, the communications apparatus further includes a processing module. The communications interface is specifically configured to receive the PPDU in the first frequency band. The processor is specifically configured to parse the PPDU.

The communications apparatus is configured to perform the data transmission method in any one of the designs in the first aspect.

According to a fourth aspect, a computer-readable storage medium is provided. The computer-readable storage medium is configured to store instructions. When the instructions are read by a computer, the computer is configured to perform the data transmission method in any one of the designs in the first aspect.

According to a fifth aspect, a computer program product is provided, and the computer program product includes instructions. When the instructions are read by a computer, the computer is configured to perform the data transmission method in any one of the designs in the first aspect.

According to a sixth aspect, a chip is provided, and the chip includes a transceiver pin. The transceiver pin is configured to transmit a physical layer protocol data unit (PPDU) in a first frequency band, where a bandwidth of the first frequency band is 320 MHz or 160+160 MHz, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer greater than 52.

In a possible design, the chip further includes a processing circuit. The processing circuit is configured to generate the PPDU. The transceiver pin is configured to send the PPDU in the first frequency band.

In a possible design, the chip further includes a processing circuit. The transceiver pin is configured to receive the PPDU in the first frequency band. The processing circuit is configured to parse the PPDU.

The chip is configured to perform the data transmission method in any one of the designs in the first aspect.

It should be noted that, for detailed descriptions of the first frequency domain resource and the second frequency domain resource, reference may be made to the descriptions in the first aspect. Details are not described herein again.

For technical effects of any one of the designs of the second aspect to the sixth aspect, refer to the beneficial effects in the corresponding method provided above. Details are not described herein again.

This application further provides a frequency domain resource indication method and apparatus, configured to balance spectrum utilization and data transmission complexity of a frequency band with a bandwidth of 320 MHz or 160+160 MHz.

According to a seventh aspect, a frequency domain resource indication method is provided and includes the following steps: A transmit end generates a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer; and then the transmit end sends the first frame.

Based on the technical solution of this application, the transmit end sends the first frame to a receive end to flexibly indicate whether the part or the entirety of the second frequency domain resource in the first frequency band is used to carry data. In other words, the transmit end may send the first frame to the receive end to indicate that the part or the entirety of the second frequency domain resource is used to carry data when spectrum utilization needs to be considered preferentially, thereby improving spectrum utilization of the first frequency band. Alternatively, the transmit end may send the first frame to the receive end to indicate that the second frequency domain resource is not used to carry data when complexity of data transmission needs to be considered preferentially. When the second frequency domain resource in the first frequency band is not used to carry data, the transmit end or the receive end can reuse an existing operation on the 80 MHz frequency band and transmit the PPDU in the first frequency band, thereby reducing complexity of data transmission.

It should be noted that, for related descriptions of the first frequency band, reference may be made to the descriptions in the first aspect. Details are not described herein again.

In a possible design, when a value of the first indication information is a first value, it indicates that the entirety of the second frequency domain resource in the first frequency band is used to carry data; or when a value of the first indication information is a second value, it indicates that the second frequency domain resource in the first frequency band is not used to carry data.

In a possible design, when the second frequency domain resource includes N RUs, the first indication information may include N bits, the N bits are in a one-to-one correspondence with the N RUs in the second frequency domain resource, and one of the N bits is used to indicate whether an RU corresponding to the bit is used to carry data.

In a possible design, the first frame is an EHT PPDU. Optionally, the first indication information may be carried in an extremely high throughput signal field A (extremely high throughput signal field A, EHT-SIG-A) in the first frame.

In a possible design, the first frame is a trigger frame. Optionally, the first indication information may be located in a common field in the first frame.

According to an eighth aspect, a frequency domain resource indication method is provided and includes the following steps: A receive end receives a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer; and then the receive end receives or sends data based on the first frame.

It should be noted that, for related descriptions of the first frequency band, reference may be made to the descriptions in the first aspect. Details are not described herein again.

In a possible design, when a value of the first indication information is a first value, it indicates that the entirety of the second frequency domain resource in the first frequency band is used to carry data; or when a value of the first indication information is a second value, it indicates that the second frequency domain resource in the first frequency band is not used to carry data.

In a possible design, when the second frequency domain resource includes N RUs, the first indication information may include N bits, the N bits are in a one-to-one correspondence with the N RUs in the second frequency domain resource, and one of the N bits is used to indicate whether an RU corresponding to the bit is used to carry data.

In a possible design, the first frame is an EHT PPDU. Optionally, the first indication information may be carried in an EHT-SIG-A in the first frame.

In a possible design, the first frame is a trigger frame. Optionally, the first indication information may be located in a common field in the first frame.

According to a ninth aspect, a communications apparatus is provided and includes a processing module and a communications module. The processing module is configured to generate a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer. The communications module is configured to send the first frame.

It should be noted that, for related descriptions of the first frequency band, reference may be made to the descriptions in the first aspect. Details are not described herein again.

In a possible design, when a value of the first indication information is a first value, it indicates that the entirety of the second frequency domain resource in the first frequency band is used to carry data; or when a value of the first indication information is a second value, it indicates that the second frequency domain resource in the first frequency band is not used to carry data.

In a possible design, when the second frequency domain resource includes N RUs, the first indication information may include N bits, the N bits are in a one-to-one correspondence with the N RUs in the second frequency domain resource, and one of the N bits is used to indicate whether an RU corresponding to the bit is used to carry data.

In a possible design, the first frame is an EHT PPDU. Optionally, the first indication information may be carried in an EHT-SIG-A in the first frame.

In a possible design, the first frame is a trigger frame. Optionally, the first indication information may be located in a common field in the first frame.

According to a tenth aspect, a communications apparatus is provided and includes a communications module. The communications module is configured to receive a first frame; and receive or send data based on the first frame. The first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer.

It should be noted that, for related descriptions of the first frequency band, reference may be made to the descriptions in the first aspect. Details are not described herein again.

In a possible design, when a value of the first indication information is a first value, it indicates that the entirety of the second frequency domain resource in the first frequency band is used to carry data; or when a value of the first indication information is a second value, it indicates that the second frequency domain resource in the first frequency band is not used to carry data.

In a possible design, when the second frequency domain resource includes N RUs, the first indication information may include N bits, the N bits are in a one-to-one correspondence with the N RUs in the second frequency domain resource, and one of the N bits is used to indicate whether an RU corresponding to the bit is used to carry data.

In a possible design, the first frame is an EHT PPDU. Optionally, the first indication information may be carried in an EHT-SIG-A in the first frame.

In a possible design, the first frame is a trigger frame. Optionally, the first indication information may be located in a common field in the first frame.

According to an eleventh aspect, a communications apparatus is provided and includes a processor and a communications interface. The processor is configured to generate a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer. The communications interface is configured to send the first frame.

The communications apparatus is configured to perform the frequency domain resource indication method in any one of the designs in the seventh aspect.

According to a twelfth aspect, a communications apparatus is provided. The communications apparatus includes a processor and a communications interface. The communications interface is configured to receive a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer. The processor is configured to determine, based on the first frame, a frequency domain resource used to carry data. The communications interface is further configured to receive or send data on the frequency domain resource used to carry data.

The communications apparatus is configured to perform the frequency domain resource indication method in any one of the designs in the eighth aspect.

According to a thirteenth aspect, a computer-readable storage medium is provided. The computer-readable storage medium is configured to store instructions. When the instructions are read by a computer, the computer is configured to perform the frequency domain resource indication method in any one of the designs in the seventh aspect or the eighth aspect.

According to a fourteenth aspect, a computer-readable storage medium is provided. The computer-readable storage medium is configured to store instructions. When the instructions are read by a computer, the computer is configured to perform the frequency domain resource indication method in any one of the designs in the seventh aspect or the eighth aspect.

According to a fifteenth aspect, a chip is provided and includes a processing circuit and a transceiver pin. The processing circuit is configured to generate a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer. The transceiver pin is configured to send the first frame.

It should be noted that, for related descriptions of the first frame, reference may be made to the descriptions in the seventh aspect. Details are not described herein again.

According to a sixteenth aspect, a chip is provided and includes a processing circuit and a transceiver pin. The transceiver pin is configured to receive a first frame, where the first frame includes first indication information, the first indication information is used to indicate whether a part or an entirety of a second frequency domain resource in a first frequency band is used to carry data, a bandwidth of the first frequency band is 320 MHz or 160+160 MHz, the first frequency band includes a first frequency domain resource and the second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer. The processing circuit is configured to determine, based on the first frame, a frequency domain resource used to carry data. The transceiver pin is further configured to receive or send data on the frequency domain resource used to carry data.

It should be noted that, for related descriptions of the first frame, reference may be made to the descriptions in the seventh aspect. Details are not described herein again.

For technical effects of any one of the designs of the ninth aspect to the sixteenth aspect, refer to the beneficial effects in the corresponding method provided above. Details are not described herein again.

### BRIEF DESCRIPTION OF DRAWINGS

FIG. 1 is a schematic diagram of a subcarrier distribution of a 20 MHz frequency band in the conventional technology;
FIG. 2 is a schematic diagram of a subcarrier distribution of a 40 MHz frequency band in the conventional technology;
FIG. 3 is a schematic diagram of a subcarrier distribution of an 80 MHz frequency band in the conventional technology;
FIG. 4 is a schematic diagram of a subcarrier distribution of a 160 MHz frequency band in the conventional technology;
FIG. 5 is a schematic diagram of a subcarrier distribution of a first frequency band in the conventional technology;
FIG. 6 is a schematic diagram of a second subcarrier distribution according to an embodiment of this application;
FIG. 7 is a schematic diagram of another second subcarrier distribution according to an embodiment of this application;
FIG. 8 is a schematic diagram of a third subcarrier distribution according to an embodiment of this application;
FIG. 9 is a schematic diagram of another third subcarrier distribution according to an embodiment of this application;
FIG. 10 is a schematic diagram of another third subcarrier distribution according to an embodiment of this application;
FIG. 11 is a schematic diagram of a fourth subcarrier distribution according to an embodiment of this application;
FIG. 12 is a schematic diagram of another fourth subcarrier distribution according to an embodiment of this application;
FIG. 13 is a schematic diagram of another fourth subcarrier distribution according to an embodiment of this application;
FIG. 14 is a schematic diagram of another fourth subcarrier distribution according to an embodiment of this application;
FIG. 15 is a flowchart of a data transmission method according to an embodiment of this application;
FIG. 16 is a flowchart of a frequency domain resource indication method according to an embodiment of this application;
FIG. 17 is a schematic diagram of a frame structure of a PPDU according to an embodiment of this application;
FIG. 18 is a schematic diagram of an EHT-SIG-B according to an embodiment of this application;
FIG. 19 is a schematic diagram of a frame structure of a trigger frame according to an embodiment of this application;
FIG. 20 is a schematic diagram of a frame structure of a trigger frame according to an embodiment of this application;
FIG. 21 is a schematic diagram of a structure of a communications apparatus according to an embodiment of this application; and
FIG. 22 is a schematic diagram of a structure of a communications apparatus according to an embodiment of this application.

### DESCRIPTION OF EMBODIMENTS

In descriptions of this application, unless otherwise specified, "/" means "or". For example, A/B may represent A or B. "And/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of' means two or more. Words such as "first" and "second" do not limit a quantity and an execution sequence, and the words such as "first" and "second" do not indicate a definite difference.

It should be noted that, in this application, terms such as "example" or "for example" are used to represent giving an example, an illustration, or descriptions. Any embodiment or design described as an "example" or "for example" in this application should not be explained as being more preferred or having more advantages than another embodiment or design. Specifically, use of the terms such as "example" or "for example" is intended to present a related concept in a specific manner.

In the descriptions of this application, an "indication" may include a direct indication and an indirect indication, or may include an explicit indication and an implicit indication. Information indicated by a piece of information (first indication information described below) is referred to as to-be-indicated information. In a specific implementation process, there are a plurality of manners of indicating the to-be-indicated information. For example, the to-be-indicated information may be directly indicated, where the to-be-indicated information itself, an index of the to-be-indicated information, or the like is indicated. For another example, the to-be-indicated information may be indirectly indicated by indicating other information, and there is an association relationship between the other information and the to-be-indicated information. For another example, only a part of the to-be-indicated information may be indicated, and the other part of the to-be-indicated information is already known or pre-agreed on. In addition, specific information may also be indicated by using a pre-agreed (for example, stipulated in a protocol) arrangement sequence of various pieces of information, to reduce indication overheads to some extent.

It should be understood that, the technical solutions of the embodiments of this application may be used in various communications systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication systems, UMTS), a worldwide interoperability for microwave access (worldwide interoperability for microwave access, WiMAX) communications system, and a future 5G communications system.

The technical solutions provided in this application are also applicable to a WLAN scenario, applicable to the IEEE 802.11 system standards, such as a next generation or next-to-next generation standard of the IEEE 802.11ax standard, and applicable to a wireless local area network system including but not limited to an Internet of Things (Internet of Things, IoT) network, a vehicle to X (Vehicle to X, V2X) network, or the like. Application scenarios of the technical solutions of this application include: communication between an access point (access point, AP) and a station (station, STA), communication between APs, and communication between STAs, and the like.

Stations STAs in this application may be various user terminals, user apparatuses, access apparatuses, subscriber stations, subscriber units, mobile stations, user agents, user devices, or other devices that have a wireless communication function. The user terminals may include various handheld devices, vehicle-mounted devices, wearable devices, computing devices that have the wireless communication function or another processing device connected to a wireless modem, and include various forms of user equipment (user equipment, UE), mobile stations (mobile station, MS), terminals (terminal), terminal devices (terminal equipment), portable communications devices, handheld devices, portable computing devices, entertainment devices, game devices or systems, global positioning system devices, or any other suitable device configured to perform network communication via wireless media. Herein, for ease of description, the devices mentioned above are collectively referred to as stations or STAs.

An access point AP in this application is an apparatus that is deployed in a wireless communications network and that provides a wireless communication function for a STA associated with the access point AP. The access point AP may be used as a hub of the communications system, and may be a communications device such as a base station, a router, a gateway, a repeater, a communications server, a switch, or a bridge. The base station may include a macro base station, a micro base station, a relay station, and the like in various forms. Herein, for ease of description, the devices mentioned above are collectively referred to as access points APs.

To facilitate understanding of the technical solutions of this application, the following first briefly describes terms used in this application.

### 1. Frequency band

The frequency band is a frequency domain resource. The frequency band may have other names, such as channel and band, and the embodiments of this application are not limited thereto. Currently, a WLAN system defines bandwidths of various frequency bands, such as 20 MHz, 40 MHz, 80 MHz, 160 MHz, 320 MHz, or 160+160 MHz. For ease of description, a frequency band with a bandwidth of x may be referred to as an x MHz frequency band. For example, the 320 MHz frequency band refers to a frequency band with a bandwidth of 320 MHz. In addition, the 320 MHz frequency band and the 160+160 MHz frequency band are collectively referred to as a first frequency band hereinafter.

It should be noted that the 160+160 MHz frequency band refers to a frequency band including two discontinuous 160 MHz subbands.

In the embodiments of this application, when a subcarrier spacing is 78.125 kHz, the first frequency band may include 4096 subcarriers. Assuming that a number of a subcarrier located in a center of the first frequency band is 0, numbers of subcarriers included in the first frequency band may be [-2048: 2047].

### 2. RU

The RU is a frequency domain resource. The RU includes one or more subcarriers (tones). Currently, the WLAN system defines the following types of RUs: 26-tone RU (that is, one RU includes 26 subcarriers), 52-tone RU (that is, one RU includes 52 subcarriers), and 106-tone RU (that is, one RU includes 106 subcarriers), 242-tone RU (that is, one RU includes 242 subcarriers), 484-tone RU (that is, one RU includes 484 subcarriers), 996-tone RU (that is, one RU includes 996 subcarriers), and the like.

### 3. Subcarrier

The subcarrier is a frequency domain resource. Subcarriers include null subcarriers, data and pilot subcarriers, guard (guard) subcarriers, and direct current subcarriers.

### 4. Subcarrier distribution (tone plan)

The subcarrier distribution refers to a manner of resource division in the frequency band. It should be noted that the frequency band has corresponding subcarrier distributions in different bandwidths.

The following describes subcarrier distributions in different bandwidths in the 802.11ax standard.

### (1) Subcarrier distribution of the 20 MHz frequency band

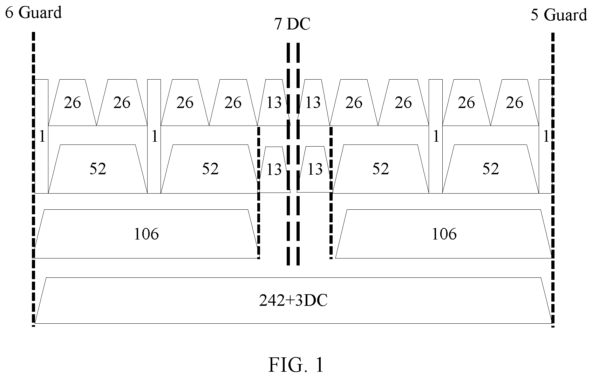

When the subcarrier spacing is 78.125 kHz, the 20 MHz frequency band includes 256 subcarriers. As shown in FIG. 1, the 20 MHz frequency band may support a 26-tone RU, a 52-tone RU, a 106-tone RU, and a 242-tone RU. Specifically, the 20 MHz frequency band may include one 242-tone RU. Alternatively, the 20 MHz frequency band may include one or more 26-tone RUs, one or more 52-tone RUs, and/or one or more 106-tone RUs.

For example, the 20 MHZ frequency band may include nine 26-tone RUs. For another example, the 20 MHz frequency band may include four 52-tone RUs and one 26-tone RU. For another example, the 20 MHz frequency band may include two 106-tone RUs and one 26-tone RU. For another example, the 20 MHZ frequency band may include one 242-tone RU. For another example, the 20 MHz frequency band may include five 26-tone RUs and two 52-tone RUs.

### (2) Subcarrier distribution of the 40 MHz frequency band

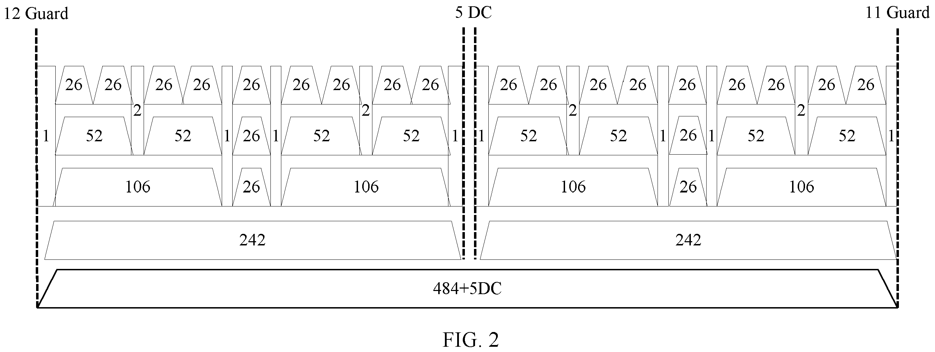

When the subcarrier spacing is 78.125 kHz, the 40 MHz frequency band includes 512 subcarriers. As shown in FIG. 2, the 40 MHz frequency band may support a 26-tone RU, a 52-tone RU, a 106-tone RU, a 242-tone RU, and a 484-tone RU. Specifically, the 40 MHz frequency band may include one 484-tone RU. Alternatively, the 40 MHz frequency band may include one or more 26-tone RUs, one or more 52-tone RUs, one or more 106-tone RUs, and/or one or more 242-tone RUs.

For example, the 40 MHZ frequency band may include eighteen 26-tone RUs. For another example, the 40 MHz frequency band may include eight 52-tone RUs and two 26-tone RUs. For another example, the 40 MHz frequency band may include four 106-tone RUs and two 26-tone RUs. For another example, the 40 MHZ frequency band may include two 242-tone RUs. For another example, the 40 MHZ frequency band may include one 484-tone RU.

### (3) Subcarrier distribution of the 80 MHz frequency band

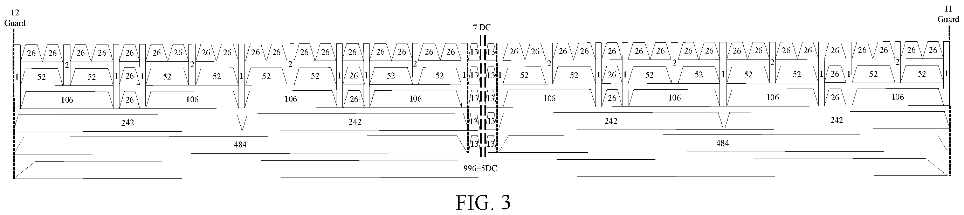

When the subcarrier spacing is 78.125 kHz, the 80 MHz frequency band includes 1024 subcarriers. As shown in FIG. 3, the 80 MHz frequency band may support a 26-tone RU, a 52-tone RU, a 106-tone RU, a 242-tone RU, a 484-tone RU, and a 996-tone RU. Specifically, the 80 MHz frequency band may include one 996-tone RU. Alternatively, the 80 MHz frequency band may include one or more 26-tone RUs, one or more 52-tone RUs, one or more 106-tone RUs, one or more 242-tone RUs, and/or one or more 484-tone RUs.

For example, the 80 MHZ frequency band may include thirty-seven 26-tone RUs. For another example, the 80 MHz frequency band may include sixteen 52-tone RUs and five 26-tone RUs. For another example, the 80 MHz frequency band may include eight 106-tone RUs and five 26-tone RUs. For another example, the 80 MHz frequency band may include four 242-tone RUs and one 26-tone RU. For another example, the 80 MHz frequency band may include two 484-tone RUs and one 26-tone RU. For another example, the 80 MHZ frequency band may include one 996-tone RU.

### (4) Subcarrier distribution of the 160 MHz frequency band

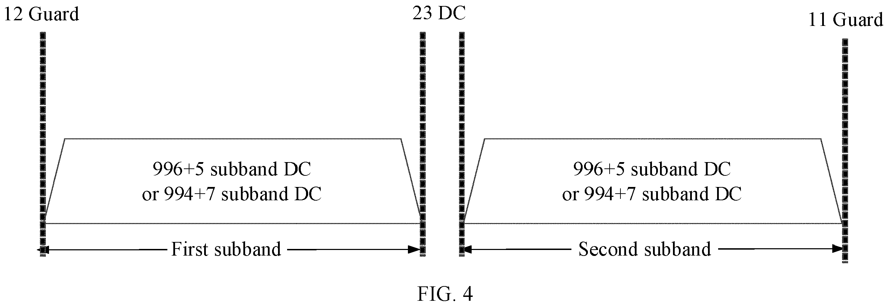

When the subcarrier spacing is 78.125 kHz, the 160 MHz frequency band includes 2048 subcarriers. As shown in FIG. 4, the subcarrier distribution of the 160 MHz frequency band may be considered as a combination of subcarrier distributions of two 80 MHz frequency bands. The 160 MHz frequency band may include one 2^{∗}996-tone RU. Alternatively, the 160 MHz frequency band may include various combinations of a 26-tone RU, a 52-tone RU, a 106-tone RU, a 242-tone RU, a 484-tone RU, and a 996-tone RU.

The foregoing describes terms used in the embodiments of this application, and details are not described below again.

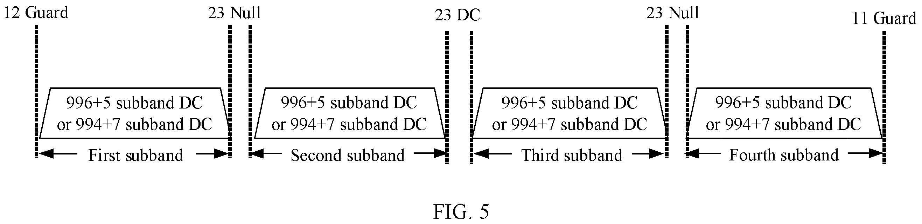

Currently, the next generation standard of 802.11ax supports a larger bandwidth (for example, 320 MHz or 160+160 MHz) to achieve an extremely high throughput. FIG. 5 is a schematic diagram of a subcarrier distribution of a first frequency band proposed in the conventional technology. For ease of description, the subcarrier distribution shown in FIG. 5 is referred to as a first subcarrier distribution of the first frequency band hereinafter.

Refer to FIG. 5. The first frequency band is equivalent to a combination of two 160 MHz frequency bands. Alternatively, the first frequency band is equivalent to a combination of four 80 MHz frequency bands. The first frequency band includes four subbands, and each subband includes 1001 subcarriers.

For example, for a subcarrier distribution of the subband, refer to FIG. 3.

It should be noted that the subband includes 1001 subcarriers. There are the following two cases: (1) The subband includes 966 data and pilot subcarriers, and the middle of the subband further includes five subband direct current subcarriers. (2) The subband includes 944 subcarriers, and the middle of the subband further includes seven subband direct current subcarriers.

Optionally, for the case (2), one or more null subcarriers may exist among the 994 subcarriers included in the subband. For example, with reference to FIG. 3, when the subband includes eight 106-tone RUs and five 26-tone RUs, one null subcarrier exists between a 106-tone RU and a 26-tone RU in the subband; and a null subcarrier may exist between two adjacent 106-tone RUs.

Refer to FIG. 5. 12 guard subcarriers further exist on a left side of a first subband, and 11 guard subcarriers further exist on a right side of a fourth subband. 23 direct current subcarriers further exist in a direct current region (or a middle region) of the first frequency band. 23 null subcarriers further exist between the first subband and a second subband. 23 null subcarriers further exist between a third subband and the fourth subband.

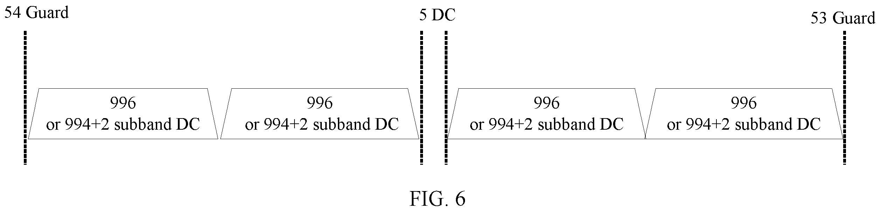

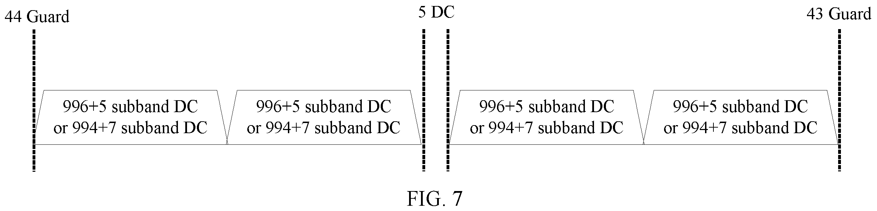

Compared with the conventional technology in FIG. 5, as shown in FIG. 6 and FIG. 7, an embodiment of this application provides a second subcarrier distribution of a first frequency band. In this embodiment, an edge guard band of the first frequency band is increased, thereby reducing filter implementation complexity.

For the first frequency band using the second subcarrier distribution, the first frequency band includes P guard subcarriers, and P is a positive integer greater than 12. A first subband is located between the P guard subcarriers and a second subband. In addition, the first frequency band further includes Q guard subcarriers, and Q is a positive integer greater than 11. A fourth subband is located between the Q guard subcarriers and a third subband.

It may be understood that a quantity of guard subcarriers in the edge guard band in the first frequency band using the second subcarrier distribution is increased, in comparison with a first frequency band using a first subcarrier distribution.

Optionally, the first frequency band includes four subbands, the four subbands include X subcarriers, and X is a positive integer greater than or equal to 996 and less than 1001. In other words, the quantity of guard subcarriers in the edge guard band in the first frequency band can be increased by reducing a quantity of null subcarriers included in the subband.

Optionally, in the first frequency band, M null subcarriers further exist between the first subband and the second subband, and/or M null subcarriers further exist between the third subband and the fourth subband, and M is an integer less than 23 and greater than or equal to 0. In other words, the quantity of guard subcarriers in the edge guard band in the first frequency band can be increased by reducing a quantity of null subcarriers between two subbands.

Optionally, in the first frequency band, the direct current region of the first frequency band includes K direct current subcarriers, and K is a positive integer less than 23. In other words, the quantity of guard subcarriers in the edge guard band in the first frequency band can be increased by reducing a quantity of direct current subcarriers in the direct current region.

It should be noted that the direct current region refers to a region in which the direct current subcarriers in the first frequency band are located. A midpoint of the direct current region is located at a center frequency of the first frequency band.

In other words, referring to FIG. 6, in the first frequency band, P is equal to 54 and Q is equal to 53. To be specific, numbers of guard subcarriers located on a left side of the first subband are specifically [-2048: -1995], numbers in the first subband are specifically [-1994: -999], numbers in the second subband are specifically [-998: - 3], numbers of the five direct current subcarriers are specifically [-2: 2], numbers in the third subband are specifically [3: 998], numbers in the fourth subband are specifically [999: 1994], and numbers of guard subcarriers located on a right side of the fourth subband are specifically [1995: 2047].

It should be noted that the subband includes 996 subcarriers. There are the following two cases: (1) The subband includes 996 data and pilot subcarriers. (2) The subband includes 994 subcarriers, and two subband direct current subcarriers further exist in a middle region of the subband.

Optionally, for the case (2), one or more null subcarriers may exist among the 994 subcarriers included in the subband. For example, for a subcarrier distribution of the subband, refer to FIG. 3. For example, when the subband includes eight 106-tone RUs and five 26-tone RUs, one null subcarrier exists between a 106-tone RU and a 26-tone RU in the subband; and a null subcarrier may exist between two adjacent 106-tone RUs.

Refer to FIG. 7. In the first frequency band, P is equal to 44 and Q is equal to 43. To be specific, numbers of guard subcarriers located on a left side of the first subband are specifically [-2048: -2005], numbers in the first subband are specifically [-2004: -1004], numbers in the second subband are specifically [-1003: -3], numbers of five direct current subcarriers are specifically [-2: 2], numbers in the third subband are specifically [3: 1003], numbers in the fourth subband are specifically [1004: 2004], and numbers of guard subcarriers located on a right side of the fourth subband are specifically [2005: 2047].

It may be understood that FIG. 6 and FIG. 7 are both examples of the second subcarrier distribution. This embodiment of this application does not limit the specific implementation of the second subcarrier distribution.

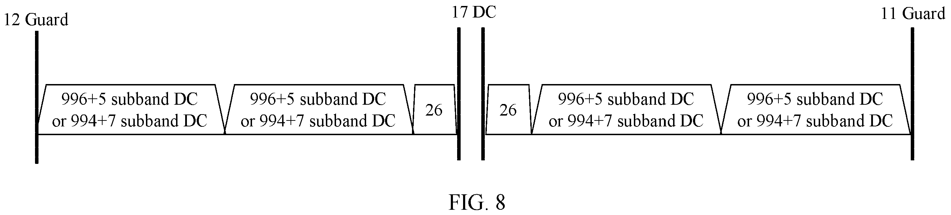

As another subcarrier distribution, as shown in FIG. 8 to FIG. 10, an embodiment of this application provides a third subcarrier distribution of a first frequency band, to improve spectrum utilization of the first frequency band.

For the first frequency band using the third subcarrier distribution, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer less than or equal to 52.

In this embodiment of this application, the four subbands include a first subband, a second subband, a third subband, and a fourth subband, where the first subband, the second subband, the third subband, and the fourth subband sequentially increase in a frequency spectrum.

In this embodiment of this application, a form of the second frequency domain resource may be N RUs, and N is a positive integer. The N RUs may be located at any position in the first frequency band.

For example, when the second frequency domain resource includes 52 data and pilot subcarriers, the second frequency domain resource includes two 26-tone RUs, or the second frequency domain resource includes one 52-tone RU.

The following describes different designs of the third subcarrier distribution by using examples. It is assumed that the second frequency domain resource includes two RUs, and that both the two RUs include 26 data and pilot subcarriers. The two RUs included in the second frequency domain resource are a first RU and a second RU respectively. The first RU and the second RU sequentially increase in the frequency spectrum.

### (1) Design 1 of the third subcarrier distribution

For the first frequency band using the design 1 of the third subcarrier distribution, the first RU is located between the second subband and a direct current region, and the second RU is located between the direct current region and the third subband.

In a possible design, the first frequency band includes P guard subcarriers, and P is a positive integer. The first subband is located between the P guard subcarriers and the second subband. For example, P may be 12.

In a possible design, the first frequency band includes Q guard subcarriers, and Q is a positive integer. The fourth subband is located between the Q guard subcarriers and the third subband. For example, Q may be 11.

In a possible design, the direct current region of the first frequency band includes K direct current subcarriers, and K is a positive integer. For example, K is 17.

In a possible design, each of the four subbands includes 1001 subcarriers. It should be noted that, for detailed descriptions of the subband including 1001 subcarriers, reference may be made to the foregoing descriptions. Details are not described herein again.

For example, referring to FIG. 8, in the first frequency band, numbers of guard subcarriers located on a left side of the first subband are specifically [-2048: -2037], numbers in the first subband are specifically [-2036: - 1036], numbers in the second subband are specifically [-1035: -35], numbers in the first RU are specifically [-34: - 9], numbers of 17 direct current subcarriers are specifically [-8: 8], numbers in the second RU are specifically [9: 34], numbers in the third subband are specifically [35: 1035], numbers in the fourth subband are specifically [1036: 2036], and numbers in the guard subcarrier located on a right side of the fourth subband are specifically [2037: 2047].

### (2) Design 2 of the third subcarrier distribution

For the first frequency band using the design 2 of the third subcarrier distribution, the first subband is located between the first RU and the second subband, and the fourth subband is located between the second RU and the third subband. In this way, when the first RU is not used to carry data, subcarriers included in the first RU are equivalent to guard subcarriers, thereby increasing a quantity of guard subcarriers in an edge guard band. Similarly, when the second RU is not used to carry data, subcarriers included in the second RU are equivalent to guard subcarriers, thereby increasing the quantity of guard subcarriers in the edge guard band. It may be understood that the increase in the quantity of guard subcarriers in the edge guard band helps reduce filter implementation complexity.

In a possible design, the first frequency band includes P guard subcarriers, and P is a positive integer. The first RU is located between the P guard subcarriers and the first subband. For example, P is 18.

In a possible design, the first frequency band includes Q guard subcarriers, and Q is a positive integer. The second RU is located between the Q guard subcarriers and the fourth subband. For example, Q is 17.

In a possible design, the direct current region of the first frequency band includes K direct current subcarriers, and K is a positive integer. For example, K is 5.

In a possible design, each of the four subbands includes 1001 subcarriers. It should be noted that, for detailed descriptions of the subband including 1001 subcarriers, reference may be made to the foregoing descriptions. Details are not described herein again.

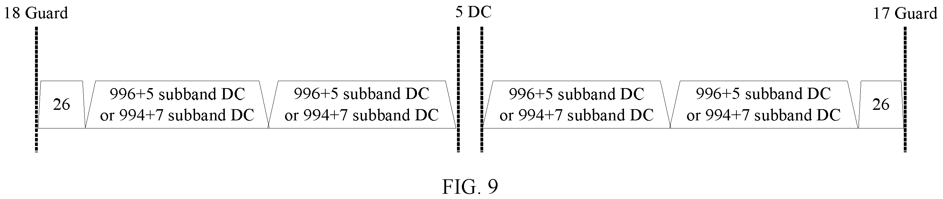

For example, referring to FIG. 9, in the first frequency band, numbers of guard subcarriers located on a left side of the first RU are specifically [-2048: -2031], numbers in the first RU are specifically [-2030: -2005], numbers in the first subband are specifically [-2004: -1004], numbers in the second subband are specifically [-1003: -3], numbers of five direct current subcarriers are specifically [-2: 2], numbers in the third subband are specifically [3: 1003], numbers in the fourth subband are specifically [1004: 2004], numbers in the second RU are specifically [2005: 2030], and numbers of guard subcarriers located on a right side of the second RU are specifically [2031: 2047].

### (3) Design 3 of the third subcarrier distribution

For the first frequency band using the design 3 of the third subcarrier distribution, the first RU is located between the first subband and the second subband, and the second RU is located between the third subband and the fourth subband.

In this way, when the first RU is not used to carry data, subcarriers included in the first RU are equivalent to null subcarriers, thereby increasing a quantity of null subcarriers between the first subband and the second subband and facilitating guarding between the first subband and the second subband. Similarly, when the second RU is not used to carry data, subcarriers included in the second RU are equivalent to null subcarriers, thereby increasing a quantity of null subcarriers between the third subband and the fourth subband and facilitating guarding between the third subband and the fourth subband.

It may be understood that if the first frequency band uses the design 3 of the third subcarrier distribution, when any one of the four subbands is not used to carry data, other subbands are not affected.

In a possible design, one or more null subcarriers exist between the first RU and the first subband. For example, three null subcarriers exist between the first RU and the first subband.

In a possible design, one or more null subcarriers exist between the first RU and the second subband. For example, three null subcarriers exist between the first RU and the second subband.

In a possible design, one or more null subcarriers exist between the second RU and the third subband. For example, three null subcarriers exist between the second RU and the third subband.

In a possible design, one or more null subcarriers exist between the second RU and the fourth subband. For example, three null subcarriers exist between the second RU and the fourth subband.

In a possible design, the first frequency band includes P guard subcarriers, and P is a positive integer. The first subband is located between the P guard subcarriers and the first RU. For example, P is equal to 12.

In a possible design, the first frequency band includes Q guard subcarriers, and Q is a positive integer. The fourth subband is located between the Q guard subcarriers and the second RU. For example, Q is equal to 11.

In a possible design, the direct current region of the first frequency band includes K direct current subcarriers, and K is a positive integer. For example, K is 5.

In a possible design, each of the four subbands includes 1001 subcarriers. It should be noted that, for detailed descriptions of the subband including 1001 subcarriers, reference may be made to the foregoing descriptions. Details are not described herein again.

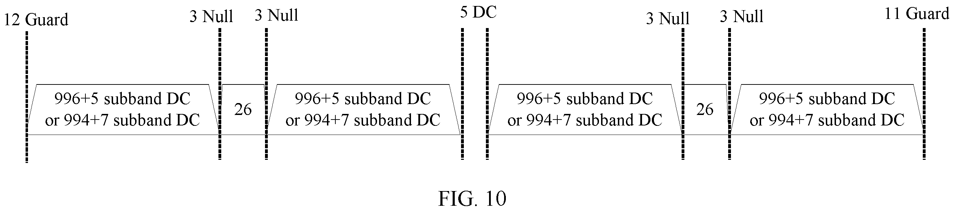

For example, referring to FIG. 10, in the first frequency band, numbers of guard subcarriers located on a left side of the first subband are specifically [-2048: -2037], and numbers in the first subband are specifically [-2036: - 1036]. Numbers of three null subcarriers between the first subband and the first RU are specifically [-1035: -1033], numbers in the first RU are specifically [-1032: -1007], numbers of three null subcarriers between the first RU and the second subband are specifically [-1006: -1004], numbers in the second subband are specifically [-1003: -3], numbers of five direct current subcarriers are specifically [-2: 2], numbers in the third subband are specifically [3: 1003], numbers of three null subcarriers between the third subband and the second RU are specifically [1004: 1006], numbers in the second RU are specifically [1007: 1032], numbers of three null subcarriers between the second RU and the fourth subband are specifically [1033: 1035], numbers in the fourth subband are specifically [1036: 2036], and numbers of guard subcarriers located on a right side of the fourth subband are specifically [2037: 2047].

It may be understood that FIG. 8 to FIG. 10 are only examples of the third subcarrier distribution. This embodiment of this application does not limit the specific implementation of the third subcarrier distribution.

In comparison with the first frequency band using the first subcarrier distribution or the second subcarrier distribution, a quantity of data and pilot subcarriers in the first frequency band using the third subcarrier distribution is increased, so that the first frequency band can carry more data, thereby improving spectrum utilization.

An embodiment of this application further provides a fourth subcarrier distribution of a first frequency band, to further improve spectrum utilization of the first frequency band.

For the first frequency band using the fourth subcarrier distribution, the first frequency band includes a first frequency domain resource and a second frequency domain resource, the first frequency domain resource includes four subbands, each of the four subbands includes X subcarriers, X is a positive integer greater than or equal to 996, the second frequency domain resource includes Y data and pilot subcarriers, and Y is a positive integer greater than 52.

In this embodiment of this application, the four subbands include a first subband, a second subband, a third subband, and a fourth subband, where the first subband, the second subband, the third subband, and the fourth subband sequentially increase in a frequency spectrum.

In this embodiment of this application, a form of the second frequency domain resource may be N RUs, and N is a positive integer. The N RUs may be located at any position in the first frequency band.

For example, when the second frequency domain resource includes 78 data and pilot subcarriers, the form of the second frequency domain resource is three 26-tone RUs; or the form of the second frequency domain resource is one 52-tone RU and one 26-tone RU; or the form of the second frequency domain resource is one 78-tone RU.

It may be understood that the 52-tone RU included in the second frequency domain resource may be considered as a combination of two 26-tone RUs. The 78-tone RU included in the second frequency domain resource may be considered as a combination of three 26-tone RUs.

The following describes different designs of the fourth subcarrier distribution by using examples. It is assumed that the second frequency domain resource includes three RUs, and that all the three RUs include 26 data and pilot subcarriers. The three RUs included in the second frequency domain resource are a first RU, a second RU, and a third RU respectively. The first RU, the second RU, and the third RU sequentially increase in the frequency spectrum.

### (1) Design 1 of the fourth subcarrier distribution

For the first frequency band using the design 1 of the fourth subcarrier distribution, the first RU is located between the second RU and the second subband, the second RU is located between the first RU and the third RU, and the third RU is located between the second RU and the third subband.

In a possible design, the first frequency band includes P guard subcarriers, and P is a positive integer. The first subband is located between the P guard subcarriers and the second subband. For example, P is equal to 12.

In a possible design, the first frequency band includes Q guard subcarriers, and Q is a positive integer. The fourth subband is located between the Q guard subcarriers and the third subband. For example, Q is equal to 11.

In a possible design, the first frequency band further includes a direct current region, the second RU includes a head 13RU and a tail 13RU, and the direct current region is located between the head 13RU and the tail 13RU. It should be noted that the head 13RU includes 13 data and pilot subcarriers. The tail 13RU includes 13 data and pilot subcarriers. The head 13RU is located on a left side of the direct current region, and the tail 13RU is located on a right side of the direct current region.

In a possible design, the direct current region of the first frequency band includes K direct current subcarriers, and K is a positive integer. For example, K is 11.

In a possible design, each of the four subbands includes 996 subcarriers. It should be noted that, for detailed descriptions of the subband including 996 subcarriers, reference may be made to the foregoing descriptions. Details are not described herein again.

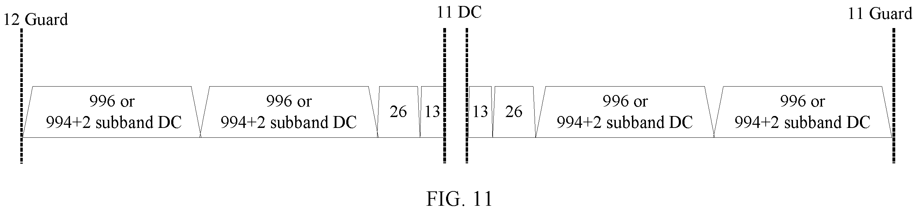

For example, referring to FIG. 11, in the first frequency band, numbers of guard subcarriers located on a left side of the first subband are specifically [-2048: -2037], numbers in the first subband are specifically [-2036: - 1041], numbers in the second subband are specifically [-1040: -45], numbers in the first RU are specifically [-44: - 19], numbers in the second RU are specifically [-18: -6, 6: 18], numbers of 11 direct current subcarriers are specifically [-5: 5], numbers in the third RU are specifically [19: 44], numbers in the third subband are specifically [45: 1040], numbers in the fourth subband are specifically [1041: 2036], and numbers of guard subcarriers located on a right side of the fourth subband are specifically [2037: 2047].

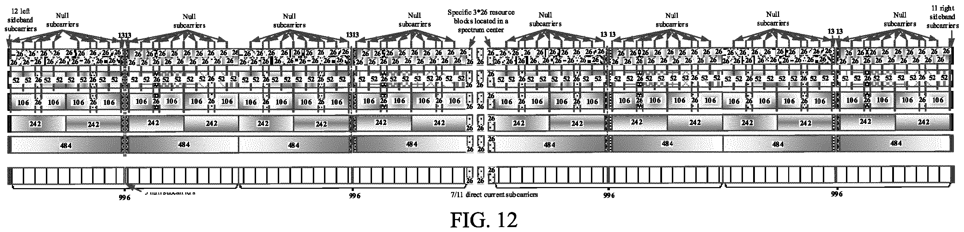

For example, for a specific structure of the subcarrier distribution shown in FIG. 11, refer to FIG. 12.

### (2) Design 2 of the fourth subcarrier distribution

For the first frequency band using the design 2 of the fourth subcarrier distribution, the first subband is located between the first RU and the second subband, the fourth subband is located between the third RU and the third subband, and the second RU is located between the second subband and the third subband.

In this way, when the first RU is not used to carry data, subcarriers included in the first RU are equivalent to guard subcarriers, thereby increasing a quantity of guard subcarriers in an edge guard band. Similarly, when the third RU is not used to carry data, subcarriers included in the third RU are equivalent to guard subcarriers, thereby increasing the quantity of guard subcarriers in the edge guard band.

In a possible design, the first frequency band includes P guard subcarriers, and P is a positive integer. The first RU is located between the P guard subcarriers and the first subband. For example, P is equal to 15.

In a possible design, the first frequency band includes Q guard subcarriers, and Q is a positive integer. The third RU is located between the Q guard subcarriers and the fourth subband. For example, Q is equal to 14.

In a possible design, the first frequency band further includes a direct current region, the second RU includes a head 13RU and a tail 13RU, and the direct current region is located between the head 13RU and the tail 13RU.

In a possible design, the direct current region of the first frequency band includes K direct current subcarriers, and K is a positive integer. For example, K is equal to 5.

In a possible design, each of the four subbands includes 996 subcarriers. It should be noted that, for detailed descriptions of the subband including 996 subcarriers, reference may be made to the foregoing descriptions. Details are not described herein again.

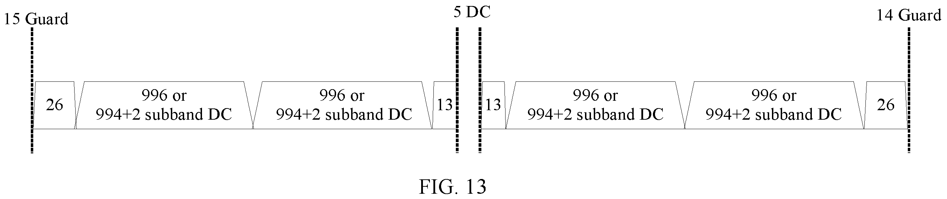

For example, referring to FIG. 13, in the first frequency band, numbers of guard subcarriers located on a left side of the first RU are specifically [-2048: -2034], numbers in the first RU are specifically [-2033: -2008], numbers in the first subband are specifically [-2007: -1012], numbers in the second subband are specifically [-1011: -16], numbers in the second RU are specifically [-15: -3, 3: 15], numbers of five direct current subcarriers are specifically [-2: 2], numbers in the third subband are specifically [16: 1011], numbers in the fourth subband are specifically [1012: 2007], numbers in the third RU are specifically [2005: 2033], and numbers of guard subcarriers located on a right side of the third RU are specifically [2034: 2047].

### (3) Design 3 of the fourth subcarrier distribution

For the first frequency band using the design 3 of the fourth subcarrier distribution, the first RU is located between the first subband and the second subband, the second RU is located between the second subband and the third subband, and the third RU is located between the third subband and the fourth subband.

In this way, when the first RU is not used to carry data, subcarriers included in the first RU are equivalent to null subcarriers, thereby increasing a quantity of null subcarriers between the first subband and the second subband and facilitating guarding between the first subband and the second subband. Similarly, when the third RU is not used to carry data, subcarriers included in the third RU are equivalent to null subcarriers, thereby increasing a quantity of null subcarriers between the third subband and the fourth subband and facilitating guarding between the third subband and the fourth subband.

It may be understood that if the first frequency band uses the design 3 of the fourth subcarrier distribution, when any one of the four subbands is not used to carry data, other subbands are not affected.

In this embodiment of this application, for the first frequency band using the design 3 of the fourth subcarrier distribution, if the second frequency domain resource in the first frequency band is not used to carry data, the fourth subcarrier distribution may be equivalent to subcarrier distributions of two 160 MHz frequency bands. For either of the two 160 MHz frequency bands, direct current subcarriers and guard subcarriers exist in the 160 MHz frequency band. The direct current subcarriers included in the 160 MHz frequency band occupy the subcarriers included in the first RU or the third RU. The guard subcarriers included in the 160 MHz frequency band occupy a part of subcarriers in the second RU.

In a possible design, one or more null subcarriers exist between the first RU and the first subband. For example, one null subcarrier exists between the first RU and the first subband.

In a possible design, one or more null subcarriers exist between the first RU and the second subband. For example, one null subcarrier exists between the first RU and the second subband.

In a possible design, one or more null subcarriers exist between the second RU and the third subband. For example, one null subcarrier exists between the second RU and the third subband.

In a possible design, one or more null subcarriers exist between the second RU and the fourth subband. For example, one null subcarrier exists between the second RU and the fourth subband.

In a possible design, the first frequency band includes P guard subcarriers, and P is a positive integer. The first subband is located between the P guard subcarriers and the first RU. For example, P is equal to 13.

In a possible design, the first frequency band includes Q guard subcarriers, and Q is a positive integer. The fourth subband is located between the Q guard subcarriers and the second RU. For example, Q is equal to 12.

In a possible design, the first frequency band further includes a direct current region, the second RU includes a head 13RU and a tail 13RU, and the direct current region is located between the head 13RU and the tail 13RU.

In a possible design, the direct current region of the first frequency band includes K direct current subcarriers, and K is a positive integer. For example, K is equal to 5.

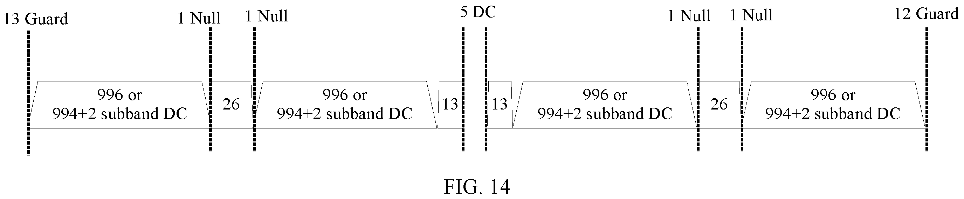

For example, referring to FIG. 14, in the first frequency band, numbers of guard subcarriers located on a left side of the first subband are specifically [-2048: -2036], numbers in the first subband are specifically [-2035: - 1040], a number of one null subcarrier between the first subband and the first RU is specifically -1039, numbers in the first RU are specifically [-1038: -1013], a number of one null subcarrier between the first RU and the second subband is specifically -1012, numbers in the second subband are specifically [-1011: -16], numbers in the second RU are specifically [-15: -3, 3: 15], numbers of five direct current subcarriers are specifically [-2: 2], numbers in the third subband are specifically [16: 1011], a number of one null subcarrier between the third subband and the third RU is specifically 1012, numbers in the third RU are specifically [1013: 1038], a number of one null subcarrier between the third RU and the fourth subband is 1039, numbers in the fourth subband are specifically [1040: 2035], and numbers of guard subcarriers located on a right side of the fourth subband are specifically [2036: 2047].

It may be understood that FIG. 11 to FIG. 14 are only examples of the fourth subcarrier distribution. This embodiment of this application does not limit the specific implementation of the fourth subcarrier distribution.

In comparison with the first frequency band using the first subcarrier distribution, the second subcarrier distribution, or the third subcarrier distribution, the first frequency band using the fourth subcarrier distribution has more data and pilot subcarriers, so that the first frequency band using the fourth subcarrier distribution can carry more data and have higher spectrum utilization.

It should be noted that this embodiment of this application does not limit the quantity of null subcarriers included in the subband. Based on actual conditions, a person skilled in the art can adjust the quantity of null subcarriers included in the subband.

It should be noted that this embodiment of this application does not limit the quantity of null subcarriers between the subband and the RU of the second frequency domain resource. A person skilled in the art can adjust the quantity of null subcarriers between the subband and the RU of the second frequency domain resource based on actual conditions.

It should be noted that this embodiment of this application does not limit the quantity of direct current subcarriers in the direct current region. A person skilled in the art can adjust the quantity of direct current subcarriers based on actual conditions.

It should be noted that this embodiment of this application does not limit the quantity of guard subcarriers in the edge guard band. A person skilled in the art can adjust the quantity of guard subcarriers in the edge guard band based on actual conditions.

In this embodiment of this application, regardless of whether the first frequency band uses the second subcarrier distribution, the third subcarrier distribution, or the fourth subcarrier distribution, when the quantity of data and pilot subcarriers included in the first frequency band remains unchanged, the quantity of direct current subcarriers in the direct current region, the quantity of guard subcarriers, and the quantity of direct current subcarriers in the subband can all be changed. In other words, the quantity of guard subcarriers and/or the quantity of direct current subcarriers in the subband in the first frequency band can be increased by reducing the quantity of direct current subcarriers in the direct current region. Alternatively, the quantity of direct current subcarriers in the direct current region and/or the quantity of direct current subcarriers in the subband in the first frequency band can be increased by reducing the quantity of guard subcarriers. Alternatively, the quantity of guard subcarriers and/or the quantity of direct current subcarriers in the direct current region in the first frequency band can be increased by reducing the quantity of direct current subcarriers in the subband.

### Embodiment 1

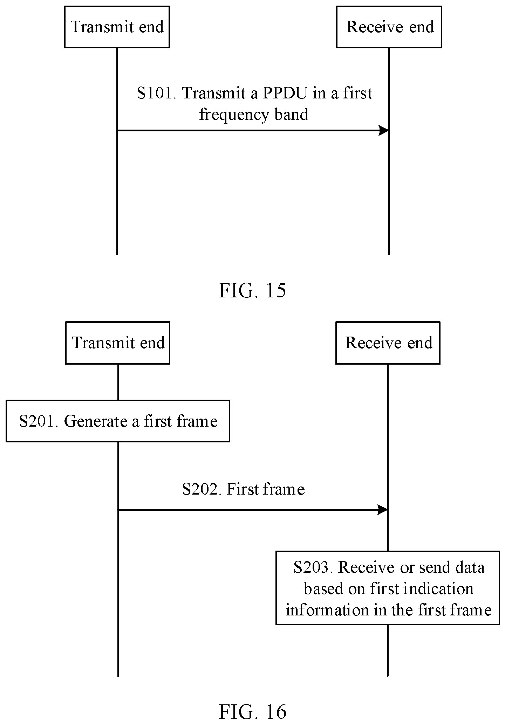

As shown in FIG. 15, this embodiment of this application provides a data transmission method. The method includes the following step.

S101. A communications apparatus transmits a PPDU in a first frequency band.

In this embodiment of this application, the communications apparatus may be an AP, or may be a STA.

It may be understood that the first frequency band may use the foregoing first subcarrier distribution, second subcarrier distribution, third subcarrier distribution, or fourth subcarrier distribution. In the data transmission process, the specific subcarrier distribution used by the first frequency band may be determined through negotiation between a receive end and a transmit end, or defined in a standard, and this embodiment of this application is not limited thereto.

When the communications apparatus is a transmit end, the transmit end generates the PPDU; and then the transmit end sends the PPDU in the first frequency band.

When the communications apparatus is a receive end, the receive end receives the PPDU in the first frequency band; and then the receive end parses the PPDU to obtain data.

It may be understood that, in the technical solution shown in FIG. 15, although the first frequency band may use the first subcarrier distribution, the second subcarrier distribution, the third subcarrier distribution, or the fourth subcarrier distribution, the first frequency band may preferably use the third subcarrier distribution or the fourth subcarrier distribution to have high spectrum utilization.

### Embodiment 2

For a first frequency band including a first frequency domain resource and a second frequency domain resource (that is, a first frequency band using a third subcarrier distribution or a fourth subcarrier distribution), in a data transmission process, if the second frequency domain resource in the first frequency band is used to carry data, a receive end or a transmit end cannot reuse an existing operation on an 80 MHz frequency band in the transmission process, causing an increase of implementation complexity of data transmission by the receive end or the transmit end in the first frequency band; or if the second frequency domain resource in the first frequency band is not used to carry data, spectrum utilization of the first frequency band is low. Therefore, during data transmission in the first frequency band, how to balance data transmission complexity and spectrum utilization is a technical problem to be resolved urgently.

To resolve the foregoing technical problem, as shown in FIG. 16, a frequency domain resource indication method provided in an embodiment of this application includes the following steps.

S201. A transmit end generates a first frame.

The transmit end may be an AP, or may be a STA. Correspondingly, a receive end may be an STA, or may be a AP. This is not limited in this embodiment of this application.

It should be noted that the first frame may be a data frame, a control frame, or a management frame. This is not limited in this embodiment of this application.

In this embodiment of this application, the first frame includes first indication information.

Design 1: The first indication information is used to indicate whether a part or an entirety of a second frequency domain resource in a first frequency band is used to carry data.

Specifically, the first indication information may have a plurality of implementations, and this embodiment of this application is not limited thereto.

For example, when a value of the first indication information is a first value, it indicates that the entirety of the second frequency domain resource in the first frequency band is used to carry data; or when a value of the first indication information is a second value, it indicates that the second frequency domain resource in the first frequency band is not used to carry data.

For another example, when the second frequency domain resource includes N RUs, the first indication information may include N bits, the N bits are in a one-to-one correspondence with the N RUs in the second frequency domain resource, and one of the N bits is used to indicate whether an RU corresponding to the bit is used to carry data. It may be understood that when the value of the bit is a third value, it indicates that the RU corresponding to the bit is used to carry data. When the value of the bit is a fourth value, it indicates that the RU corresponding to the bit is not used to carry data.

Optionally, in a single-user (single-user, SU) uplink transmission scenario, or a single-user downlink transmission scenario, or a multi-user (multi-user, MU) downlink transmission scenario, the first frame may be a data frame. In this case, the first indication information included in the first frame is used to indicate whether the part or the entirety of the second frequency domain resource is used to carry data in the first frame.

It should be noted that the downlink transmission means that the AP sends a radio frame to the STA. The uplink transmission means that the STA sends a radio frame to the AP.

It may be understood that, in the single-user uplink transmission scenario, or in the single-user downlink transmission scenario, the first frame is an SU PPDU. In the multi-user downlink transmission scenario, the first frame is an MU PPDU.

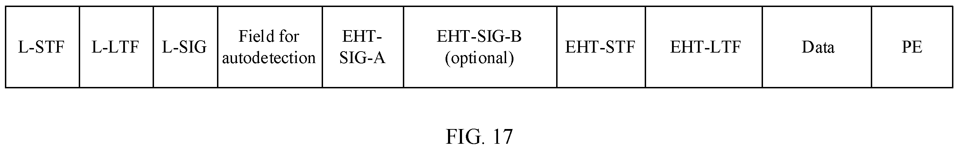

FIG. 17 shows an example of a frame structure of a PPDU. As shown in FIG. 17, the PPDU may include a legacy-short training field (legacy-short training field, L-STF), a legacy-long training field (legacy-long training field, L-LTF), a legacy-signal field (legacy-signal field, L-SIG), a field for autodetection (field for autodetection), an EHT-SIG-A, an EHT-SIG-B, an extremely high throughput-short training field (extremely high throughput-short training field, EHT-STF), an extremely high throughput-long training field (extremely high throughput-long training field, EHT-LTF), data (data), and a data packet extension (packet extension, PE).

The L-STF, the L-LTF, and the L-SIG are all legacy preamble fields (legacy preamble field).

In addition, a subcarrier distribution of the first frequency band is applicable to the EHT-STF, EHT-LTF, data, and PE in the PPDU.

Optionally, based on the design 1, the first indication information may be located in the EHT-SIG-A and/or the EHT-SIG-B.

For example, in a multi-user orthogonal frequency division multiple access (orthogonal frequency division multiple access, OFDMA) downlink transmission scenario, the first indication information may be carried in the EHT-SIG-B. In a single-user transmission scenario, or in a multi-user non-OFMDA downlink transmission scenario, the first indication information may be carried in the EHT-SIG-A.

It may be understood that in a process of multi-user OFDMA downlink transmission, the AP divides a spectrum bandwidth into several RUs each time when transmitting data. Therefore, when performing resource allocation, the AP can determine, based on a capability of the STA with respect to a quantity of resource units that can be simultaneously supported by the STA for transmission, and information such as traffic that needs to be transmitted by the STA, a specific quantity of RUs to be allocated to the STA, and a type of each RU. In a possible design, in a process of associating with the AP, the STA may include, in an association request frame, information about a quantity of resource units that can be simultaneously supported by the STA for transmission, so that the AP can properly schedule a radio resource based on a capability of the STA. Alternatively, in another possible design, a WLAN system may preset a quantity of resource units that are simultaneously supported by each STA for transmission. Alternatively, a WLAN system may not limit a quantity of resource units that are simultaneously supported by a STA for transmission, and the AP allocates resource units to each STA based on a resource status of the AP. This is not specifically limited in this embodiment of this application.

The following describes in detail the first indication information for a multi-user OFMDA downlink transmission scenario.

The EHT-SIG-B includes two content channels (content channels, CCs). The two CCs are both used to carry resource unit allocation indication information. For ease of description, the two content channels may be denoted as CC1 and CC2.

The CC1 contains resource allocation information of a plurality of odd 20 MHz channels and station information transmitted on the plurality of odd 20 MHz channels. The CC2 contains resource allocation information of a plurality of even 20 MHz channels and station information transmitted on the plurality of even 20 MHz channels.

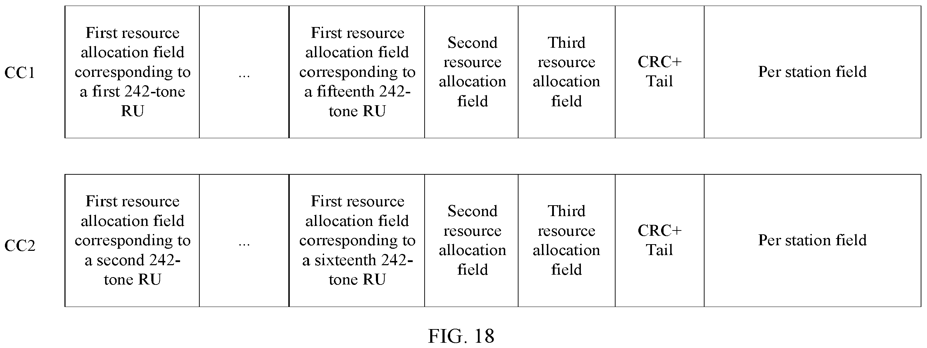

As shown in FIG. 18, the EHT-SIG-B includes 16 first resource allocation fields. The 16 first resource allocation fields correspond to sixteen 242-tone RUs in the first frequency band. The first resource allocation field is used to indicate a spectrum division manner of the corresponding 242-tone RU. It should be noted that the spectrum division manner is a manner of combining different types of RUs into which the 242-tone RU can be divided.

A first resource allocation field corresponding to an odd 242-tone RU is located in the CC1, and a first resource allocation field corresponding to an even 242-tone RU is located in the CC2. It should be noted that the first resource allocation field may have other names, such as RU allocation subfield (RU allocation subfield), but this embodiment of this application is not limited thereto.

The CC1 and CC2 each further include a second resource allocation field. The second resource allocation field located in the CC1 corresponds to a 26-tone RU in the middle of a first subband and a 26-tone RU in the middle of a third subband. The second resource allocation field located in the CC2 corresponds to a 26-tone RU in the middle of a second subband and a 26-tone RU in the middle of a fourth subband. The second resource allocation field may have other names, such as center 26-tone RU indication (center 26-tone RU indication), but this embodiment of this application is not limited thereto.

The CC1 and CC2 each further include a third resource allocation field. The third resource allocation field may have other names, such as an additional RU indication (additional RU signaling), but this embodiment of this application is not limited thereto.

In a possible design, the third resource allocation field on the CC1 is the same as the third resource allocation field on the CC2. In other words, the third resource allocation field on the CC1 is a copy of the third resource allocation field on the CC2. Alternatively, the third resource allocation field on the CC2 is a copy of the third resource allocation field on the CC1. In this case, the first indication information is the third resource allocation field on the CC1; or the first indication information is the third resource allocation field on the CC2.

In another possible design, the third resource allocation field on the CC1 is different from the third resource allocation field on the CC2. In this case, the first indication information includes the third resource allocation field on the CC1 and the third resource allocation field on the CC2.

For example, the second frequency domain resource includes N RUs, the third resource allocation field on the CC1 may correspond to N₁ RUs among the N RUs, and the third resource allocation field on the CC2 may correspond to N₂ RUs among the N RUs. It should be understood that N₁ + N₂ = N, where N₁ and N₂ are both positive integers. The third resource allocation field on the CC1 includes N₁ bits, the N₁ bits are in a one-to-one correspondence with the N₁ RUs, and each of the N₁ bits is used to indicate whether an RU corresponding to the bit is used to carry data. The third resource allocation field on the CC2 includes N₂ bits, the N₂ bits are in a one-to-one correspondence with the N₂ RUs, and each of the N₂ bits is used to indicate whether an RU corresponding to the bit is used to carry data.

The CC1 and CC2 each further include a cyclic redundancy code (cyclic redundancy code, CRC) and a tail (tail) field for cyclic decoding.

The CC1 and CC2 each further include a per station field (per user field). Based on an order of RU allocation, the per station field includes a plurality of corresponding station fields (user fields).

It should be noted that, to effectively distinguish between RUs allocated to different STAs, each station field further includes an identity of the STA. After receiving the first frame, each of a plurality of STAs participating in simultaneous transmission needs to read signaling information only in a station field that contains an identity of the STA, and therefore determines an RU that the AP allocates to the station by using the station field.

Optionally, in a multi-user uplink transmission process, the first frame is a trigger frame.

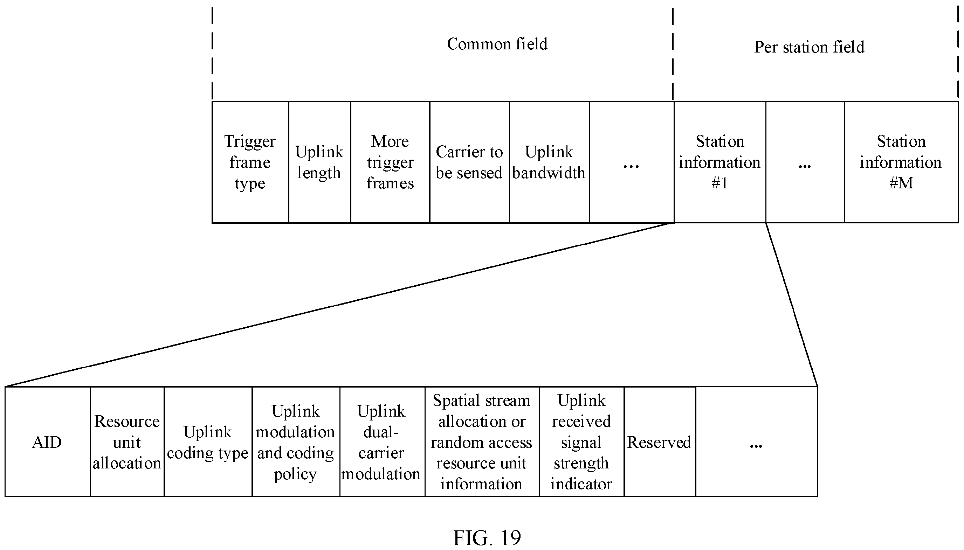

As shown in FIG. 19, the trigger frame may include a common field and a per station field. The common field may include fields such as trigger frame type (trigger type), uplink length (UL length), and uplink bandwidth. The per station field includes a plurality of station fields. Each station field includes an association identifier (association identifier, AID), a resource unit allocation (RU allocation) field, an uplink coding type field, an uplink modulation policy field, an uplink dual-carrier modulation field, spatial stream allocation or random access resource unit information, an uplink received signal strength field, and a reserved (reserved) bit. The resource unit allocation field is used to indicate an RU allocated to a station corresponding to the station information.

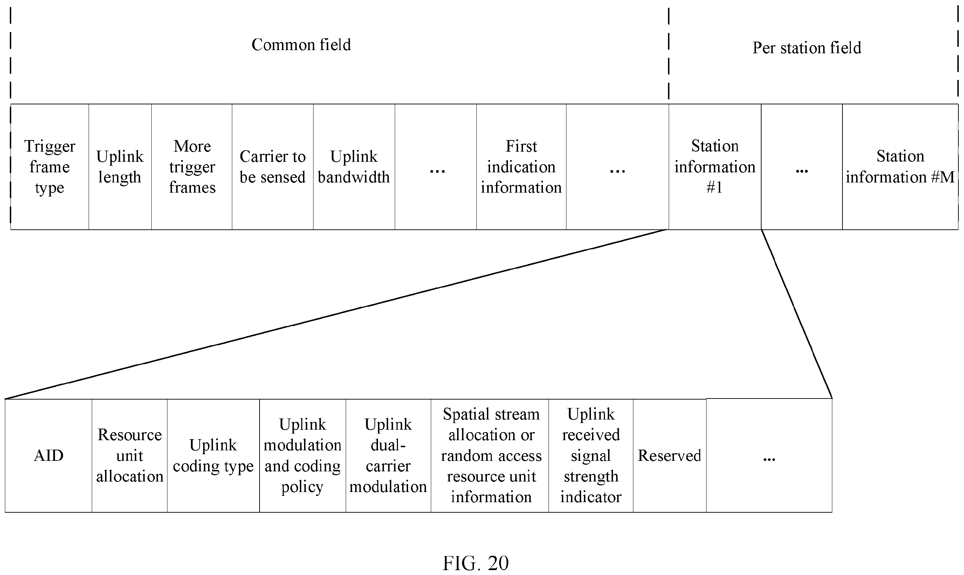

Optionally, as shown in FIG. 20, the first indication information may be located in the common field in the trigger frame. In other words, a field may be added to the common field of the trigger frame to carry the first indication information. Alternatively, the common field of the trigger frame may use an existing field to carry the first indication information.

Optionally, the first indication information may also be equivalent to the per station field. In other words, the first indication information may include a plurality of station fields. In a possible design, a station field corresponding to the second frequency domain resource exists in the plurality of station fields. In this way, when an AID of the station field corresponding to the second frequency domain resource is a fifth value, it indicates that the second frequency domain resource is not used to carry data; or when an AID of the station field corresponding to the second frequency domain resource is not a fifth value, it indicates that the second frequency domain resource is used to carry data. In another possible design, N station fields exist in the plurality of station fields, and the N station fields are in a one-to-one correspondence with the N RUs in the second frequency domain resource. For each of the N station fields, when an AID corresponding to the station field is a fifth value, it indicates that an RU corresponding to the station field is not used to carry data; or when an AID corresponding to the station field is not a fifth value, it indicates that the RU corresponding to the station field is used to carry data. For example, the fifth value may be 2046, but this embodiment of this application is not limited thereto.

Optionally, the first indication information is equivalent to a resource unit allocation field in the station information corresponding to the receive end. If the resource unit allocation field in the station information corresponding to the receive end is used to indicate the RU in the second frequency domain resource, it indicates that the RU in the second frequency domain resource is used to carry data. If the resource unit allocation field in the station information corresponding to the receive end is not used to indicate the RU in the second frequency domain resource, it indicates that the RU in the second frequency domain resource is not used to carry data.

Design 2: The first indication information is used to indicate a bandwidth of a frequency band used for data transmission and a subcarrier distribution used by the frequency band.

Optionally, when the first indication information is used to indicate that the bandwidth of the frequency band used for data transmission is 320 MHz or 160+160 MHz, and the frequency band uses the foregoing third subcarrier distribution or fourth subcarrier distribution, it indicates that the second frequency domain resource in the first frequency band is used to carry data.

Optionally, when the first indication information is used to indicate that the bandwidth of the frequency band used for data transmission is 320 MHz or 160+160 MHz, and the frequency band uses the foregoing first subcarrier distribution or second subcarrier distribution, it indicates that the first frequency band does not have the second frequency domain resource.

For example, the first indication information may be shown in Table 1.

**Table 1**

| First indication information | Bandwidth and subcarrier distribution |
|---|---|
| 000 | 20 MHz |
| 001 | 40 MHz |
| 010 | 80 MHz |
| 011 | 160 MHz |
| 100 | 320 MHz, first subcarrier distribution (or second subcarrier |
| | distribution) |
| 101 | 320 MHz, third subcarrier distribution (or fourth subcarrier distribution) |
| ... | ... |

Optionally, based on the design 2, the first indication information may be located in the EHT-SIG-A.

S202. The transmit end sends the first frame to the receive end, so that the receive end receives the first frame from the transmit end.

S203. The receive end receives or sends data based on the first frame.

In an implementation, the receive end determines, based on the first frame, a frequency domain resource corresponding to the receive end. Then the receive end receives or sends data on the frequency domain resource corresponding to the receive end.

Optionally, the frequency domain resource corresponding to the receive end is an RU allocated to the receive end.

Based on the technical solution shown in FIG. 16, the transmit end can comprehensively consider factors such as a type of the receive end and a service type to determine which of spectrum utilization and data transmission complexity is more important. Therefore, when improving spectrum utilization is more important, the transmit end can use the first indication information in the first frame to indicate that the part or the entirety of the second frequency domain resource in the first frequency band is used to carry data. When reducing complexity of data transmission is more important, the transmit end may indicate, by using the first indication information in the first frame, that the second frequency domain resource in the first frequency band is not used to carry data.

The foregoing mainly describes the solutions provided in the embodiments of this application from a perspective of the communications apparatus. It may be understood that, to implement the foregoing functions, a communications apparatus includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In the embodiments of this application, the apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that module division in the embodiments of this application is an example, and is merely logical function division. During actual implementation, another division manner may be used. An example in which each function module is obtained through division based on each corresponding function is used below for description.

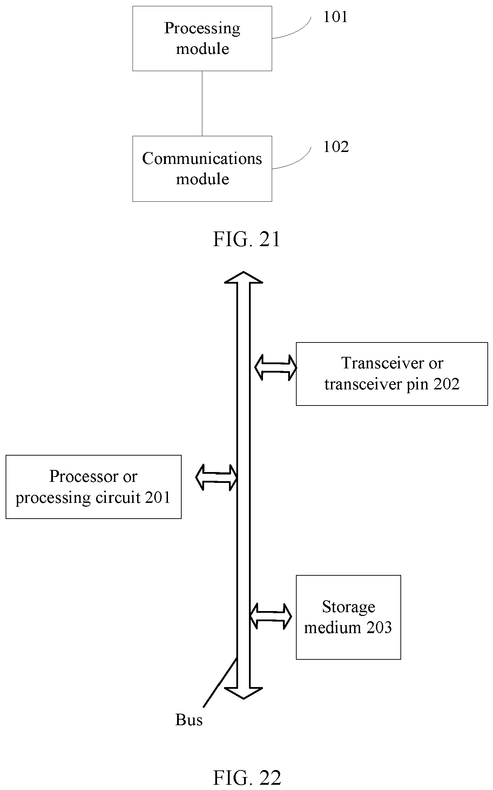

FIG. 21 shows a communications apparatus according to an embodiment of this application. The communications apparatus includes a processing module 101 and a communications module 102.

When the communications apparatus is used as a transmit end, the processing module 101 is configured to generate a PPDU, and perform step S201 in FIG. 16. The communications module 102 is configured to perform step S101 in FIG. 15 and step S202 in FIG. 16.

When the communications apparatus is used as a receive end, the processing module 101 is configured to parse a PPDU. The communications module 102 is configured to perform step S101 in FIG. 15 and steps S202 and S203 in FIG. 16.

FIG. 22 is a diagram of a structure of a possible product form of a communications apparatus according to an embodiment of this application.

In a possible product form, the communications apparatus described in this embodiment of this application may be a communications device, and the communications device includes a processor 201 and a transceiver 202. Optionally, the communications device further includes a storage medium 203.

When the communications apparatus is used as a transmit end, the processor 201 is configured to generate a PPDU, and perform step S201 in FIG. 16. The transceiver 202 is configured to perform step S101 in FIG. 15 and step S202 in FIG. 16.

When the communications apparatus is used as a receive end, the processor 201 is configured to parse a PPDU. The transceiver 202 is configured to perform step S101 in FIG. 15 and steps S202 and S203 in FIG. 16.

In another possible product form, the communications apparatus described in this embodiment of this application may also be implemented by a general-purpose processor or a special-purpose processor, commonly known as a chip. The chip includes a processing circuit 201 and a transceiver pin 202. Optionally, the chip may further include a storage medium 203.

When the chip is used at a transmit end, the processing circuit 201 is configured to generate a PPDU, and perform step S201 in FIG. 16. The transceiver pin 202 is configured to perform step S101 in FIG. 15 and step S202 in FIG. 16.

When the chip is used at a receive end, the processing circuit 201 is configured to parse a PPDU. The transceiver pin 202 is configured to perform step S101 in FIG. 15 and steps S202 and S203 in FIG. 16.

In still another possible product form, the communications apparatus in this embodiment of this application may also be implemented by using the following circuit or component: one or more field-programmable gate arrays (field programmable gate arrays, FPGAs), a programmable logic device (programmable logic device, PLD), a controller, a state machine, gate logic, a discrete hardware component, or any other suitable circuit, or any combination of circuits capable of performing various functions described throughout this application.

It should be understood that computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

The foregoing description about implementations allows a person skilled in the art to understand that, for ease of description and brevity, division of the foregoing functional modules is used as an example for description. In an actual application, the foregoing functions can be allocated to different modules and implemented according to a requirement. In other words, an inner structure of an apparatus is divided into different functional modules to implement all or some of the functions described above.

It should be understood that in the several embodiments provided in this application, the disclosed apparatuses and methods may be implemented in other manners. For example, the described apparatus embodiments are merely an example. For example, the division into the modules or units is merely logical function division, and there may be another division manner during actual implementation. For example, a plurality of units or components may be combined, or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed at different places. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method comprises:
transmitting a physical layer protocol data unit (PPDU) in a first frequency band, wherein a bandwidth of the first frequency band is 320 MHz or 160+160 MHz, the first frequency band comprises a first frequency domain resource and a second frequency domain resource, the first frequency domain resource comprises four subbands, each of the four subbands comprises X subcarriers, X is a positive integer greater than or equal to 996, the second frequency domain resource comprises Y data and pilot subcarriers, and Y is a positive integer greater than 52.

2. The data transmission method according to claim 1, wherein before the transmitting a PPDU in a first frequency band, the method comprises: generating the PPDU; and
the transmitting a PPDU in a first frequency band comprises: transmitting the PPDU in the first frequency band.

3. The data transmission method according to claim 1, wherein the transmitting a PPDU in a first frequency band comprises: receiving the PPDU in the first frequency band; and
after the transmitting a PPDU in a first frequency band, the method further comprises: parsing the PPDU.

4. The data transmission method according to any one of claims 1 to 3, wherein the second frequency domain resource comprises a first resource unit (RU), a second RU, and a third RU, the first RU, the second RU, and the third RU sequentially increase in a frequency spectrum, and each of the first RU, the second RU, and the third RU comprises 26 data and pilot subcarriers.

5. The data transmission method according to claim 4, wherein the four subbands comprise a first subband, a second subband, a third subband, and a fourth subband, wherein the first subband, the second subband, the third subband, and the fourth subband sequentially increase in the frequency spectrum.

6. The data transmission method according to claim 5, wherein the first subband is located between the first RU and the second subband, the second RU is located between the second subband and the third subband, and the fourth subband is located between the third subband and the third RU.

7. The data transmission method according to claim 6, wherein the first frequency band further comprises a direct current (DC) region, the second RU comprises a head 13RU and a tail 13RU, and the DC region is located between the head 13RU and the tail 13RU.

8. The data transmission method according to claim 7, wherein the DC region comprises five DC subcarriers.

9. The data transmission method according to any one of claims 6 to 8, wherein the first frequency band further comprises 15 guard subcarriers, and the first RU is located between the 15 guard subcarriers and the first subband.

10. The data transmission method according to any one of claims 6 to 9, wherein the first frequency band further comprises 14 guard subcarriers, and the third RU is located between the 14 guard subcarriers and the fourth subband.

11. The data transmission method according to claim 5, wherein the first RU is located between the first subband and the second subband, the second RU is located between the second subband and the third subband, and the third RU is located between the third subband and the fourth subband.

12. The data transmission method according to claim 11, wherein one or more null subcarriers exist between the first subband and the first RU.

13. The data transmission method according to claim 11 or 12, wherein one or more null subcarriers exist between the first RU and the second subband.

14. The data transmission method according to any one of claims 11 to 13, wherein one or more null subcarriers exist between the third subband and the third RU.

15. The data transmission method according to any one of claims 11 to 14, wherein one or more null subcarriers exist between the third RU and the fourth subband.

16. The data transmission method according to any one of claims 11 to 15, wherein the first frequency band comprises 13 guard subcarriers, and the first subband is located between the first RU and the 13 guard subcarriers.

17. The data transmission method according to any one of claims 11 to 16, wherein the first frequency band comprises 12 guard subcarriers, and the fourth subband is located between the third RU and the 12 guard subcarriers.

18. The data transmission method according to any one of claims 11 to 17, wherein the first frequency band further comprises a direct current (DC) region, the second RU comprises a head 13RU and a tail 13RU, and the DC region is located between the head 13RU and the tail 13RU.

19. The data transmission method according to claim 18, wherein the DC region comprises five DC subcarriers.

20. The data transmission method according to claim 5, wherein the first RU is located between the second RU and the second subband, the second RU is located between the first RU and the third RU, and the third RU is located between the second RU and the third subband.

21. The data transmission method according to claim 20, wherein the first frequency band further comprises 12 guard subcarriers, and the first subband is located between the 12 guard subcarriers and the second subband.

22. The data transmission method according to claim 20 or 21, wherein the first frequency band further comprises 11 guard subcarriers, and the fourth subband is located between the 11 guard subcarriers and the third subband.

23. The data transmission method according to any one of claims 20 to 22, wherein the first frequency band further comprises a direct current (DC) region, the second RU comprises a head 13RU and a tail 13RU, and the DC region is located between the head 13RU and the tail 13RU.

24. The data transmission method according to claim 23, wherein the DC region comprises 11 DC subcarriers.

25. A communications apparatus, comprising:
a communications module, configured to transmit a physical layer protocol data unit (PPDU) in a first frequency band, wherein a bandwidth of the first frequency band is 320 MHz or 160+160 MHz, the first frequency band comprises a first frequency domain resource and a second frequency domain resource, the first frequency domain resource comprises four subbands, each of the four subbands comprises X subcarriers, X is a positive integer greater than or equal to 996, the second frequency domain resource comprises Y data and pilot subcarriers, and Y is a positive integer greater than 52.

26. The communications apparatus according to claim 25, further comprising a processing module, wherein
the processing module is configured to generate the PPDU; and
the communications module is specifically configured to send the PPDU in the first frequency band.

27. The communications apparatus according to claim 25, further comprising a processing module, wherein
the communications module is specifically configured to receive the PPDU in the first frequency band; and
the processing module is configured to parse the PPDU.

28. The communications apparatus according to any one of claims 25 to 27, wherein the second frequency domain resource comprises a first resource unit (RU), a second RU, and a third RU, the first RU, the second RU, and the third RU sequentially increase in a frequency spectrum, and each of the first RU, the second RU, and the third RU comprises 26 data and pilot subcarriers.

29. The communications apparatus according to claim 28, wherein the four subbands comprise a first subband, a second subband, a third subband, and a fourth subband, wherein the first subband, the second subband, the third subband, and the fourth subband sequentially increase in the frequency spectrum.

30. The communications apparatus according to claim 29, wherein the first subband is located between the first RU and the second subband, the second RU is located between the second subband and the third subband, and the fourth subband is located between the third subband and the third RU.

31. The communications apparatus according to claim 30, wherein the first frequency band further comprises a direct current (DC) region, the second RU comprises a head 13RU and a tail 13RU, and the DC region is located between the head 13RU and the tail 13RU.

32. The communications apparatus according to claim 31, wherein the DC region comprises five DC subcarriers.

33. The communications apparatus according to any one of claims 30 to 32, wherein the first frequency band further comprises 15 guard subcarriers, and the first RU is located between the 15 guard subcarriers and the first subband.

34. The communications apparatus according to any one of claims 30 to 33, wherein the first frequency band further comprises 14 guard subcarriers, and the third RU is located between the 14 guard subcarriers and the fourth subband.

35. The communications apparatus according to claim 29, wherein the first RU is located between the first subband and the second subband, the second RU is located between the second subband and the third subband, and the third RU is located between the third subband and the fourth subband.

36. The communications apparatus according to claim 35, wherein the first frequency band further comprises one or more null subcarriers, and the one or more null subcarriers are located between the first RU and the first subband.

37. The communications apparatus according to claim 35 or 36, wherein one or more null subcarriers exist between the first RU and the second subband.

38. The communications apparatus according to any one of claims 35 to 37, wherein one or more null subcarriers exist between the third RU and the third subband.

39. The communications apparatus according to any one of claims 35 to 38, wherein one or more null subcarriers exist between the third RU and the fourth subband.

40. The communications apparatus according to any one of claims 35 to 39, wherein the first frequency band comprises 13 guard subcarriers, and the first subband is located between the first RU and the 13 guard subcarriers.

41. The communications apparatus according to any one of claims 35 to 40, wherein the first frequency band comprises 12 guard subcarriers, and the fourth subband is located between the third RU and the 12 guard subcarriers.

42. The communications apparatus according to any one of claims 35 to 41, wherein the first frequency band further comprises a direct current (DC) region, the second RU comprises a head 13RU and a tail 13RU, and the DC region is located between the head 13RU and the tail 13RU.

43. The communications apparatus according to claim 42, wherein the DC region comprises five DC subcarriers.

44. The communications apparatus according to claim 29, wherein the first RU is located between the second RU and the second subband, the second RU is located between the first RU and the third RU, and the third RU is located between the second RU and the third subband.

45. The communications apparatus according to claim 44, wherein the first frequency band further comprises 12 guard subcarriers, and the first subband is located between the 12 guard subcarriers and the second subband.

46. The communications apparatus according to claim 44 or 45, wherein the first frequency band further comprises 11 guard subcarriers, and the fourth subband is located between the 11 guard subcarriers and the third subband.

47. The communications apparatus according to any one of claims 44 to 46, wherein the first frequency band further comprises a direct current (DC) region, the second RU comprises a head 13RU and a tail 13RU, and the DC region is located between the head 13RU and the tail 13RU.

48. The communications apparatus according to claim 47, wherein the DC region comprises 11 DC subcarriers.

49. A communications apparatus, comprising a processor and a communications interface, wherein the processor is configured to perform a processing operation in the method according to any one of claims 1 to 24, and the communications interface is configured to perform a communication operation in the method according to any one of claims 1 to 24.

50. A computer-readable storage medium, wherein the computer-readable storage medium comprises computer instructions; and when the computer instructions are run on a computer, the computer is enabled to perform the data transmission method according to any one of claims 1 to 24.

51. A computer program product, wherein the computer program product comprises computer instructions; and when the computer program product runs on a computer, the computer is enabled to perform the data transmission method according to any one of claims 1 to 24.

52. A chip, wherein the chip comprises a processing circuit and a transceiver pin, wherein the processing circuit is configured to perform a processing operation in the method according to any one of claims 1 to 24, and the transceiver pin is configured to perform a communication operation in the method according to any one of claims 1 to 24.

53. A frequency domain resource indication method, comprising:
generating a first frame, wherein the first frame comprises first indication information, the first indication information is used to indicate whether a part or an entirety of a second frequency domain resource in a first frequency band is used to carry data, a bandwidth of the first frequency band is 320 MHz or 160+160 MHz, the first frequency band comprises a first frequency domain resource and the second frequency domain resource, the first frequency domain resource comprises four subbands, each of the four subbands comprises X subcarriers, X is a positive integer greater than or equal to 996, the second frequency domain resource comprises Y data and pilot subcarriers, and Y is a positive integer; and
sending the first frame.

54. The method according to claim 53, wherein
when a value of the first indication information is a first value, it indicates that the entirety of the second frequency domain resource in the first frequency band is used to carry data; or
when a value of the first indication information is a second value, it indicates that the second frequency domain resource in the first frequency band is not used to carry data.

55. The method according to claim 53 or 54, wherein when the second frequency domain resource comprises N RUs, the first indication information may comprise N bits, the N bits are in a one-to-one correspondence with the N RUs in the second frequency domain resource, and one of the N bits is used to indicate whether a corresponding RU is used to carry data.

56. The method according to any one of claims 53 to 55, wherein the first frame is an extremely high throughput EHT PPDU, and the first indication information is carried in an extremely high throughput signal field A in the first frame.

57. The method according to any one of claims 53 to 55, wherein the first frame is a trigger frame, and the first indication information is located in a common field in the first frame.

58. A frequency domain resource indication method, comprising:
receiving a first frame, wherein the first frame comprises first indication information, the first indication information is used to indicate whether a part or an entirety of a second frequency domain resource in a first frequency band is used to carry data, a bandwidth of the first frequency band is 320 MHz or 160+160 MHz, the first frequency band comprises a first frequency domain resource and the second frequency domain resource, the first frequency domain resource comprises four subbands, each of the four subbands comprises X subcarriers, X is a positive integer greater than or equal to 996, the second frequency domain resource comprises Y data and pilot subcarriers, and Y is a positive integer; and
receiving or sending data based on the first frame.

59. The method according to claim 58, wherein
when a value of the first indication information is a first value, it indicates that the entirety of the second frequency domain resource in the first frequency band is used to carry data; or
when a value of the first indication information is a second value, it indicates that the second frequency domain resource in the first frequency band is not used to carry data.

60. The method according to claim 58 or 59, wherein when the second frequency domain resource comprises N RUs, the first indication information may comprise N bits, the N bits are in a one-to-one correspondence with the N RUs in the second frequency domain resource, and one of the N bits is used to indicate whether a corresponding RU is used to carry data.

61. The method according to any one of claims 58 to 60, wherein the first frame is an extremely high throughput EHT PPDU, and the first indication information is carried in an extremely high throughput signal field A in the first frame.

62. The method according to any one of claims 58 to 60, wherein the first frame is a trigger frame, and the first indication information is located in a common field in the first frame.

63. A communications apparatus, comprising a processing module and a communications module, wherein
the processing module is configured to generate a first frame, wherein the first frame comprises first indication information, the first indication information is used to indicate whether a part or an entirety of a second frequency domain resource in a first frequency band is used to carry data, a bandwidth of the first frequency band is 320 MHz or 160+160 MHz, the first frequency band comprises a first frequency domain resource and the second frequency domain resource, the first frequency domain resource comprises four subbands, each of the four subbands comprises X subcarriers, X is a positive integer greater than or equal to 996, the second frequency domain resource comprises Y data and pilot subcarriers, and Y is a positive integer; and
the communications module is configured to send the first frame.

64. The communications apparatus according to claim 63, wherein
when a value of the first indication information is a first value, it indicates that the entirety of the second frequency domain resource in the first frequency band is used to carry data; or
when a value of the first indication information is a second value, it indicates that the second frequency domain resource in the first frequency band is not used to carry data.

65. The communications apparatus according to claim 63 or 64, wherein when the second frequency domain resource comprises N RUs, the first indication information may comprise N bits, the N bits are in a one-to-one correspondence with the N RUs in the second frequency domain resource, and one of the N bits is used to indicate whether a corresponding RU is used to carry data.

66. The communications apparatus according to any one of claims 63 to 65, wherein the first frame is an extremely high throughput EHT PPDU, and the first indication information is carried in an extremely high throughput signal field A in the first frame.

67. The communications apparatus according to any one of claims 63 to 65, wherein the first frame is a trigger frame, and the first indication information is located in a common field in the first frame.

68. A communications apparatus, comprising a processing module and a communications module, wherein
the communications module is configured to receive a first frame, wherein the first frame comprises first indication information, the first indication information is used to indicate whether a part or an entirety of a second frequency domain resource in a first frequency band is used to carry data, a bandwidth of the first frequency band is 320 MHz or 160+160 MHz, the first frequency band comprises a first frequency domain resource and the second frequency domain resource, the first frequency domain resource comprises four subbands, each of the four subbands comprises X subcarriers, X is a positive integer greater than or equal to 996, the second frequency domain resource comprises Y data and pilot subcarriers, and Y is a positive integer; and
the processing module is configured to receive or send data based on the first frame.

69. The communications apparatus according to claim 68, wherein
when a value of the first indication information is a first value, it indicates that the entirety of the second frequency domain resource in the first frequency band is used to carry data; or
when a value of the first indication information is a second value, it indicates that the second frequency domain resource in the first frequency band is not used to carry data.

70. The communications apparatus according to claim 68 or 69, wherein when the second frequency domain resource comprises N RUs, the first indication information may comprise N bits, the N bits are in a one-to-one correspondence with the N RUs in the second frequency domain resource, and one of the N bits is used to indicate whether a corresponding RU is used to carry data.

71. The communications apparatus according to any one of claims 68 to 70, wherein the first frame is an extremely high throughput EHT PPDU, and the first indication information is carried in an extremely high throughput signal field A in the first frame.

72. The communications apparatus according to any one of claims 68 to 70, wherein the first frame is a trigger frame, and the first indication information is located in a common field in the first frame.

73. A communications apparatus, comprising a processor and a communications interface, wherein the processor is configured to perform a processing operation in the method according to any one of claims 53 to 62, and the communications interface is configured to perform a communication operation in the method according to any one of claims 53 to 62.

74. A computer-readable storage medium, wherein the computer-readable storage medium comprises computer instructions; and when the computer instructions are run on a computer, the computer is enabled to perform the data transmission method according to any one of claims 53 to 62.

75. A computer program product, wherein the computer program product comprises computer instructions; and when the computer program product is run on a computer, the computer is enabled to perform the data transmission method according to any one of claims 53 to 62.

76. A chip, wherein the chip comprises a processing circuit and a transceiver pin, wherein the processing circuit is configured to perform a processing operation in the method according to any one of claims 53 to 62, and the transceiver pin is configured to perform a communication operation in the method according to any one of claims 53 to 62.
